(19) Europäisches Patentamt
European Patent Office
Office européen des brevets

(11) **EP 4 060 007 A1**

(12) **EUROPEAN PATENT APPLICATION**

(43) Date of publication:
**21.09.2022 Bulletin 2022/38**

(51) International Patent Classification (IPC):
***C09K 9/00*** *(2006.01)*

(21) Application number: **21163020.7**

(52) Cooperative Patent Classification (CPC):
**C09K 9/00**

(22) Date of filing: **17.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
• **STUDART, André R.**
**8044 Zürich (CH)**
• **RAFSANJANI ABBASI, Ahmad**
**5230 Odense M (DK)**
• **POLONI, Erik**
**8032 Zürich (CH)**
• **PLACE, Vadim**
**75007 Paris (FR)**
• **FERRETTI, David**
**8406 Winterthur (CH)**

(54) **COMPOSITES WITH STRAIN-INDUCED ARCHITECTURED COLOR**

(57) A composite material (1) comprises a matrix (2) and at least one particle (3). The matrix (2) is deformable and is configured to adopt at least a first state of deformation and a second state of deformation being different from the first state of deformation upon an application of a force (F) to the composite material (1). The particle (3) is in connection with the matrix (2). The composite material (1) exhibits at least a first characteristics when the matrix (2) is in its first state of deformation and the composite material (1) exhibits at least a second characteristics when the matrix (2) is in its second state of deformation, wherein the first characteristics differs from the second characteristics.

FIG. 1a

**Description**

TECHNICAL FIELD

The present invention relates to a composite material according to claim 1, to the use of such a composite material according to claim 12, to a flexible device comprising such a composite material according to claim 13, and to a method of manufacturing a composite material according to claim 14.

PRIOR ART

In contrast to man-made devices, animals such as fishes, squids and chameleons have evolved elegant, energy-efficient intracellular structures to dynamically control color for communication, warning, protection, and disguise. In some of these animals, iridescent color arises from the constructive interference of rays reflected by lamellar nanostructures present inside specialized cells called iridophores. Changes in color and brightness result from cell-mediated manipulation of the lamellar spacing and orientation of such reflective structures. For example, the Neon tetra fish changes color from blue-green (-490 nm) to indigo (-400 nm) by simply tilting highly reflective guanine particles using the so-called Venetian blind mechanism. Driven by electrical stimulation of the iridophores, the color changes are reversible and ultrafast. Since the mechanism relies on the incoming light as power source and the reflected rays are reinforced by constructive interference, these animals can generate strong and dynamically tunable color with minimum energy input.

Among the man-made devices soft materials that quickly change color under external stimulus have been used to create enticing functional devices, including stretchable displays, tactile sensors, camouflaging soft robots and damage-reporting structures. Fast color shifts in these materials are driven by electrical fields, fluid flow or mechanical stress through different coupling mechanism. Transitions in molecular configuration have been used in mechano-responsive color-changing polymer, whereas electron transfer mechanisms have been exploited to fabricate electroluminescent robotic skin. Soft materials with stress-tunable structural color have also been developed using polymer-infiltrated photonic crystals or liquid crystalline systems. Although proof-of-concept materials and devices have been successfully demonstrated, the exploitation of these materials in autonomous and energy-efficient bulk devices is currently hindered by the high energy input needed to induce color change, slow speed, irreversibility and challenges in up-scaling the synthesis and manufacturing processes.

SUMMARY OF THE INVENTION

It is an object of the present invention to overcome the drawbacks of the prior art. It is in particular an object of the present invention to provide a composite material that features fast and reversible changes of its properties in an energy-efficient manner.

This object is achieved with a composite material according to claim 1. That is, a composite material is provided, wherein the composite material comprises a matrix and at least one particle. The matrix is deformable and is configured to adopt at least a first state of deformation and a second state of deformation being different from the first state of deformation upon an application of a force to the composite material. The particle is in connection with the matrix. The composite material exhibits at least a first characteristics when the matrix is in its first state of deformation and the composite material exhibits at least a second characteristics when the matrix is in its second state of deformation. The first characteristics differs from the second characteristics.

The matrix being deformable is understood as a matrix being able to change its shape as a result of a force acting on the composite material. Hence, a shape of the matrix in its first state of deformation is different from a shape of the matrix in its second state of deformation. The deformation preferably corresponds to a length change of the matrix and/or to a shearing of the matrix and/or to an indentation of the matrix and/or to a compression of the matrix. The first state of deformation can be a state, wherein no force acts on the composite material. That is, the first state of deformation can correspond to an undeformed state of the matrix. However, it is likewise conceivable that the first state of deformation corresponds to a state wherein a first force acts on the composite material and wherein the matrix is deformed as compared to its undeformed state. In this case, the already deformed matrix adopts its second state of deformation upon the application of a second force being different such as stronger than and/or acting along another direction than the first force. It should be noted that the matrix can be configured to adopt two or more states of deformations, preferably a plurality of states of deformations. Furthermore, the matrix is preferably configured to continuously adopt two or more states of deformations. Explanations provided herein regarding the first and second state of deformation likewise apply to the situation of two or more states of deformation. The force preferably is an external force, i.e. a force being applied to the composite material as compared to an internal force being generated by or within the composite material, for example. However, it is likewise conceivable that the force is an internal force such as an internal force that develops internally of the composite material as a result of stimuli coming from an environment of the composite material such as a change in humidity, a change in temperature, etc.

The particle being in connection with the matrix is preferably in a physical connection and/or in a chemical connection with the matrix. For example, the particle can be at least partially arranged on a surface of the matrix and/or at least partially within the matrix. In the latter case, the particle can be said to be at least partially embedded in the matrix. However, it is also conceivable that the particle is entirely embedded within the matrix. The particle being in physical connection with the matrix is understood as being structurally connected with the matrix. The particle being in chemical connection with the matrix is understood as being chemically connected to be matrix, e.g. via one or more chemical bonds.

The force preferably is strain, particularly preferably a tensile strain that is applied to the matrix.

The matrix is preferably stretchable and/or mechanically deformable and/or elastically deformable. Additionally or alternatively the matrix preferably comprises or consists of one or more polymers or copolymers thereof. It is particularly preferred that the matrix comprises or consists of at least one elastomer and/or of at least one polymer comprising siloxane such as polysiloxane and/or of at least one crosslinked polymer such as a hydrogel or an organogel. Additionally or alternatively the matrix is preferably transparent or essentially transparent.

Thus, a change in the characteristics of the composite material is preferably caused by a mechano-optic effect occurring when the composite material, in particular the matrix, is deformed such as stretched.

In the event of a stretchable matrix the first and second states of deformation preferably correspond to differently stretched states of the matrix, i.e. it is preferred that a length of the matrix is changeable upon the application of a force to the composite material. Hence, it is preferred that a length of the matrix in its first state of deformation is different from a length of the matrix in its second state of deformation. It is furthermore preferred that a length of the matrix is longer the greater the applied force is. In other words, the greater the force being applied to the composite material the more the matrix is stretched.

The matrix preferably is elastically deformable, i.e. in the absence of a force acting on the composite material the matrix returns into its original shape. As such, the change of characteristics of the composite material is preferably a reversible change.

The matrix preferably has a Young's modulus that is 100 MPa or less, preferably 10 MPa or less, and particularly preferably 1 MPa or less. In fact, if the change in the characteristics of the composite material upon application of the force corresponds to a change in colour of the composite material, it is preferred that the Young's modulus is less than 1 MPa since the stretchability of polymers such as silicone decreases as they are becoming more stiff. In other words, it is preferred that the composite material corresponds to a so-called soft composite, i.e. a composite material comprising a matrix that comprises or consists of materials having an elastic modulus comparable to that of soft biological tissues (< 1MPa). It is furthermore preferred that the composite material is filled with low enough concentration of particles that does not restrict their stretchability and resilience to fracture of the matrix. The matrix can comprise a Poisson's ratio of smaller than or equal to 0.5. To this end it is particularly preferred that the Poisson's ratio is essentially 0.5. Moreover, the matrix is preferably configured such, that it is deformable in at least one direction running perpendicularly to at least one direction of the force being applied to the composite material. For example, if the composite material is of an essentially rectangular shape that extends along an extension direction, the force could be applied along the extension direction, and wherein the matrix is preferably deformable along a direction running perpendicular to said extension direction. Said deformation in the direction running perpendicularly to the direction along which the force is applied is preferably occurring in addition to a deformation in the direction along which the force is applied. Said deformation along the direction running perpendicular to the extension direction preferably corresponds to a compression, e.g. upon the application of a force along the extension direction that stretches the matrix, and an expansion, e.g. in the absence of a force along the extension direction, as a result of which a previously stretched matrix was compressed, and/or to a shearing of the matrix. In fact, due to the Poisson effect, the matrix will preferably shrink along the direction running perpendicular to the direction of the applied stretching force. If the applied force is compressive, the material will expand along the perpendicular direction.

It is furthermore preferred that the matrix and the particle being in connection therewith are configured such that a deformation of the matrix causes a change in the orientation of the particle. In other words, the composite material is preferably configured such that the application of a force is translated into or transferred into or effectuates a change in the orientation of the particle within the matrix.

The first characteristics and/or the second characteristics preferably is an optical property and/or an electrical property and/or a mechanical property and/or a magnetic property.

To this end it is particularly preferred that the first characteristics is a first value of an optical property and/or a first value of an electrical property and/or a first value of a mechanical property and/or a first value of a magnetic property. It is likewise particularly preferred that the second characteristics is a second value of an optical property and/or a second value of an electrical property and/or a second value of a mechanical property and/or a second value of a magnetic property. Hence, it is particularly preferred that the composite material is configured such, that it exhibits a first value of an optical property when the matrix is in its first state of deformation and a second value of the optical property when the matrix is in its second state of deformation. Likewise, it is particularly preferred that the composite material is configured such, that it exhibits a first value of an electrical property when the matrix is in its first state of deformation and a second value of the electrical property when the matrix is in its second state of deformation. Likewise, it is particularly preferred that the composite material is configured such, that it exhibits a first value of a mechanical property when the matrix is in its first state of deformation and a second value of the mechanical property when the matrix is in its second state of deformation. Likewise, it is particularly preferred that the composite material is configured such, that it exhibits a first value of a magnetic property when the matrix is in its first state of deformation and a second value of the magnetic property when the matrix is in its second state of deformation. In other words, it is particularly preferred that the deformation of the matrix results in a change of a particular property. Again in other words, the property of the composite material when the matrix is in its first state of deformation and in its second state of deformation preferably is the same, however of a different value. A different value can correspond to a different magnitude, a different strength, different wavelengths, different directions along which radiation is emitted, etc. Explanations regarding characteristics or properties likewise apply to values of a property and vice versa. Likewise, explanations regarding different characteristics or different properties apply to different values of a property and vice versa.

The optical property can be a refraction of the composite material and/or an index of refraction of the composite material and/or a polarization and/or a reflection and/or an absorption and/or a photoluminescence such as a fluorescence and/or a transmittance and/or a diffraction and/or a dispersion and/or a dichroism and/or a scattering and/or a birefringence and/or a colour, i.e. an appearance, and/or a photosensitivity, etc. of the composite material. Hence, the composite material is preferably configured to interact with electromagnetic radiation.

The electrical property can be a dielectric constant of the composite material and/or a loss factor of the composite material and/or an electric capacitance of the composite material and/or an electrical inductance of the composite material and/or an electrical resistance of the composite material. Hence, the composite material is preferably configured to interact with electrical waves and/or electrical signals such as electrical pulses or voltages. For instance, it is conceivable that the composite material exhibits a different dielectric constant when it is in its first state of deformation as compared to its second state of deformation. Consequently, a capacity of the composite material can change, as well.

The mechanical property can be an elastic modulus and/or a mechanical strength and/or a strain at rupture and/or a damping factor and/or a wear resistance and/or a velocity of sound waves and/or a phase of mechanical waves. Hence, the composite material is preferably configured to interact with mechanical waves.

The magnetic property can be a magnetic susceptibility and/or a remanent magnetic field.

When the matrix is in its first state of deformation, the particle is preferably configured to at least partially reflect and/or absorb electromagnetic radiation being incident on the particle and/or to at least partially emit electromagnetic radiation upon an incidence of electromagnetic radiation on the particle. The first characteristics is preferably based on said reflected electromagnetic radiation and/or absorbed electromagnetic radiation and/or emitted electromagnetic radiation. Additionally or alternatively when the matrix is in its second state of deformation, the particle is preferably configured to at least partially reflect and/or absorb electromagnetic radiation being incident on the particle and/or to at least partially emit electromagnetic radiation upon an incidence of electromagnetic radiation on the particle, and wherein the second characteristics preferably is based on said reflected electromagnetic radiation and/or absorbed electromagnetic radiation and/or emitted electromagnetic radiation.

The applied force such as strain thus preferably reconfigures the composite architecture thus changing the electromagnetic radiation being yielded by the particle upon an incidence of electromagnetic radiation on the particle such as an intensity and/or a wavelength of the reflected and/or absorbed and/or emitted electromagnetic radiation.

The particle is preferably configured such that it can reflect and/or absorb incident electromagnetic radiation being in the visible range of the electromagnetic spectrum and/or that it can emit electromagnetic radiation in response to incident electromagnetic radiation being in the visible range. Additionally or alternatively the particle is preferably configured such that it reflects electromagnetic radiation being in the visible range of the electromagnetic spectrum. Such characteristics have the advantage that no special equipment or energy sources have to be used. Instead, a characteristics of the composite material can be effected using standard illumination such as daylight and/or the characteristics of the composite material can be observed by an observer with the naked eye. However, it is likewise conceivable that the particle is configured such as to reflect and/or absorb and/or emit incident electromagnetic radiation and/or to reflect and/or absorb and/or emit electromagnetic radiation being in another range of the electromagnetic spectrum, e.g. being in the ultraviolet or the infrared region of the electromagnetic spectrum.

Thus, the particle is preferably configured such, that electromagnetic radiation being incident on the particle comprises one or more wavelengths being different from the electromagnetic radiation being yielded from the particle upon an incidence of electromagnetic radiation on the particle. Furthermore, the particle can be configured such, that one or more beam directions along which electromagnetic radiation is incident on the particle differ from one or more beam directions along which the particle yields electromagnetic radiation upon an incidence of electromagnetic radiation on the particle.

The particle is configured preferably to adopt at least a first state of orientation when the matrix is in its first state of deformation and to adopt at least a second state of orientation being different from the first state of orientation when the matrix is in its second state of deformation. The composite material preferably exhibits its first characteristics when the particle is in its first state of orientation and/or the composite material preferably exhibits its second characteristics when the particle is in its second state of orientation.

Thus, the particle is preferably configured to change its orientation upon the application of the force on the composite material. Said change in orientation preferably corresponds to a rotation of the particle about one or more axes of rotation. Additionally or alternatively said change in orientation preferably corresponds to a rotation of the particle with respect to at least one surface of the composite material.

Said change in orientation can additionally correspond to a change with respect to one or more spatial directions. For example, the particle can be configured to shift along one or more spatial directions while it rotates about one or more axes of rotation. That is, the rotation of the particle may or may not be accompanied by a spatial displacement of the particle. Moreover, said change in orientation preferably depends on the deformation of the matrix. For example, the more the matrix is stretched, the more the particle is rotated. To this end it is particularly preferred that the matrix is configured to translate or transfer or effectuate the force such as an externally applied strain into a motion such as a rotational motion of the particle. For example, if the matrix is stretched, the particles (probably in addition to getting further apart from each other) due to straining rotate with respect to their initial configuration.

Furthermore, the characteristics of the composite material preferably depends on the orientation and/or on the architecture of the particles. Additionally, a change in the characteristics preferably arises from a re-orientation of the particles driven by a force such as an externally applied mechanical strain or internal stresses that arise from interactions with the environment.

The particle is preferably configured and/or arranged within the matrix such, that at least one surface of the particle at least partially faces at least one direction of the force when said force is applied to the composite material. Additionally or alternatively the particle is preferably arranged and/or configured within the matrix such, that the first characteristics and/or the second characteristics of the composite material depends on a direction along which the force is applied to the composite material. Additionally or alternatively the particle is preferably configured and/or arranged within the matrix such, that the first characteristics and/or the second characteristics of the composite material is based on an orientation of the particle with respect to the composite material, in particular based an orientation of at least one surface of the particle with respect to at least one composite surface of the composite material. In other words, the surface of the particle is preferably at least partially oriented along an intended direction along which the force such as strain is to be applied to the matrix.

The characteristics, in fact the reflectance and/or absorption and/or emission and as such for example a color, of the composite material preferably depends on the orientation of the force such as the strain being applied on the composite material. This means that the composite material is preferably configured to take different colors depending on the orientation of the force such as the strain orientation under which the force is acting on the composite material. The characteristics of the composite material, in particular the reflectance and/or absorption and/or emission of or from the composite material, preferably exhibits a dependence on the orientation of the particle, in particular of the surface of the particle, with respect to the composite material, in particular with respect to the composite surface. Said dependence is preferably an angular dependence, see also further below. The angular dependence is understood as the distribution of angles of all the surfaces of the particle with respect to the composite surface. The first orientation of the particle and the second orientation of the particle mentioned above thus preferably corresponds to an angular orientation of the particle with respect to the composite material.

As just mentioned, the composite material preferably comprises at least one composite surface and the particle preferably comprises at least one surface. A plane running through the surface of the particle is preferably arranged at a first angle with respect to a plane running through the composite surface when the matrix is in its first state of deformation. Said plane running through the surface of the particle is furthermore preferably arranged at a second angle with respect to the plane running through the composite surface when the matrix is in its second state of deformation. The first angle is preferably different from the second angle. In a used state of the composite material, the said composite surface preferably faces a user of the composite material. In other words, the said composite surface is preferably arranged at a direction of observation under which a user observes the composite material. Additionally or alternatively, it is preferred that the said composite surface is arranged such that electromagnetic radiation is incident on the said composite surface when the composite material is in the used state. In fact, the said composite surface preferably corresponds to a top surface or a bottom surface of the composite material. The used state of the composite material could be a state wherein the composite material is provided in or as a flexible device such as a stretchable display and/or a soft actuator and/or a sensor and/or a medical device and/or a toy and/or a robot, see further below.

Hence, the angle being enclosed between the plane running through the surface of the particle and the plane running through the composite surface preferably changes upon a deformation of the matrix. To this end it is particularly preferred that said angle decreases with an increase in the force such as tensile strain being applied to the composite material. In this case it is also preferred that the first angle is larger than the second angle. Or generally, that the angle between the plane running through the surface of the particle and the plane running through the composite surface becomes smaller with increasing force being applied to the composite material. Namely, and as mentioned above, the deformation preferably corresponds to a length change and/or a shearing of the matrix. Hence, the larger the length of the matrix the smaller the angle established between the plane running through the surface of the particle and the plane running through the composite surface. The same applies to a shearing or compression of the matrix. To this end it is particularly preferred that the angle between the surface of the particle and the composite surface decreases monotonically with a magnitude of the globally applied force such as the globally applied strain.

Again in other words, the particle is preferably configured and/or arranged such, that the angle being enclosed between the plane running through the surface of the particle and plane running through the composite surface is changeable upon a deformation of the matrix. That is, the particle is preferably configured and/or arranged within the matrix such, that the application of the force distorts the orientation of the particle with respect to the matrix, in particular the orientation of the surface of the particle with respect to the composite surface of the composite material. Said distortion affects the characteristics of the composite material, in particular the reflectance and/or absorption and/or emission of or from the composite material. In fact, electromagnetic radiation being reflected and/or absorbed and/or emitted from the particle when the matrix is in its first state of deformation - and the particle consequently being in its first state of orientation - differs from the electromagnetic radiation being reflected and/or absorbed and/or emitted from the particle when the matrix is in its second state of deformation - and the particle consequently being in its second state of orientation.

It is preferred that a difference between the first angle and the second angle preferably is about 90°. For instance, the first angle is preferably about 0° and/or the second angle preferably is about 90°. If the angle being enclosed by the plane running through the surface of the particle and the plane running through the composite surface is 0° the particle is preferably arranged upright with respect to the composite surface. When said angle is 90°, the particle is preferably arranged flat, i.e. parallel with respect to the composite surface.

Additionally or alternatively a visibility of the first characteristics and/or of the second characteristics of the composite material to an observer of the composite material preferably depends on an angle of observation under which the observer observes the composite material. In other words, any deformation of the matrix that deviates the orientation of particles from their initial orientation, preferably affects the first characteristics and/or the second characteristics in dependence of the angle of observation.

Additionally or alternatively it is preferred that the composite material is configured such, that a surface area of the surface of the particle that faces the composite surface changes upon a deformation of the matrix. To this end it is particularly preferred that the extent or measure by which said surface area faces the composite surface increases with an increase in the force such as tensile strain being applied to the composite material. In other words, the larger the force being applied to the composite material the greater the extent or measure by which the surface area of the particle faces the composite surface becomes. Again in other words, the force preferably rotates the surface of the particle towards the composite surface. Hence, like micromirrors, the particles are configured to reflect and/or absorb and/or emit an increasing amount of incident electromagnetic radiation due to the increase of the reflecting and/or absorbing and/or emitting surface area as the composite material, in particular the matrix is deformed such as stretched.

The particle preferably has an essentially two-dimensional shape and/or has a flat shape and/or has a shape selected from the group of platelets, fibers, rods, tubes, ribbons or whiskers or combinations thereof. Additionally or alternatively the particle preferably has a surface area extending along a first plane being larger than a surface area extending along a second plane running perpendicularly to the first plane, the surface area extending along the first plane preferably furthermore being larger than a surface area extending along a third plane running perpendicularly to the first plane and the second plane.

Thus, in a sense, the particle preferably has an asymmetrical shape. In other words, the particle preferably is not a rotationally symmetrical particle that is symmetrical with respect to a rotation by any angle around an axis of symmetry that maps the particle onto itself such as a spherical particle. That is, the particle is preferably non-spherical. Instead, it is preferred that the particle comprises a geometrical extension along at least one spatial direction being larger than its geometrical extension along one or more other spatial directions.

For example, the particle can be said to comprise a front surface and an opposing back surface, a top surface and an opposing bottom surface, as well as two opposing side surfaces. It is preferred that a surface area of the front surface and/or of the opposing back surface is larger than a surface area of the top surface and/or of the opposing bottom surface. It is furthermore preferred that the surface area of the front surface and/or of the opposing back surface is larger than a surface area of the side surfaces.

The at least one surface of the particle mentioned above preferably corresponds to the surface of the particle having the largest surface area, and thus preferably corresponds here to the front surface and/or the back surface of the particle. In other words, it is preferred that the particle is arranged within the matrix such, that electromagnetic radiation is incident on a surface of the particle that has the largest geometrical extent. Additionally or alternatively, it is preferred that the particle is arranged within the matrix such that electromagnetic radiation is reflected and/or absorbed and/or emitted from a surface of the particle having the largest geometrical extent. Additionally or alternatively it is preferred that the surface of the particle facing the (intended) direction of the force being applied to the composite material is the surface of the particle having the largest geometrical extent.

Said largest geometrical extent or surface area can alternatively be understood as follows. The particle preferably has an average length in one dimension of 1 nanometer or more, preferably of 10 nanometer or more. A diameter of the particle preferably is in the range of 1 nm-1 mm, more preferably in the range of 1 $\mu$m-100 $\mu$m. It is furthermore preferred that the length is at least twice, preferably at least five times as large as the diameter. The shape of the cross-section of the particle can be circular, but also different cross-sectional shapes are possible such as rectangular, square, cocoon, oval shapes etc. A thickness of the particle preferably is in the range of 1 nm-10 $\mu$m, more preferably in the range of 50 nm-1000 nm. A width of the particle preferably is in the range of 10 nm - 100 $\mu$m. It is furthermore preferred that the length is at least twice, preferably at least five times larger than the thickness. It is furthermore preferred that the width is larger than the thickness, preferably at least twice as large as the thickness. The cross-sectional area in a direction to the length can be rectangular but it can also be oval or ellipsoid, the above values for the thickness and the width corresponding to the main axes of such shapes. The numerical values given correspond to average values.

However, it should be noted that spherical particles are likewise conceivable.

The particle preferably comprises at least one interface, and wherein said interface results in a mismatch in refractive indices being associated with the particle. The interface could be provided by a surface of the particle and the matrix. Likewise, the interface could be provided by a surface of the particle and a coating, see below.

Additionally or alternatively the particle preferably comprises at least one coating, said coating having at least one refractive index being different from at least one refractive index of the particle. That is, the particle is preferably coated with a material having a refractive index being different from that of the particle. The coating can coat the entire particle or only part of the particle.

A refractive index of the coating preferably is in the range of 2.0-3.0. A refractive index of the particle preferably is in the range of 1.4-2.0. The refractive index of the coating is preferably larger than the refractive index of particle. The particle is preferably based on metallic, ceramic, polymeric or composite materials, and is particularly preferably selected from alumina, gibbsite, clay, talc, mica, glass, silica, silicon carbide, aluminum boride, graphite, aluminum, copper, glass fibres, polymer fibres, carbon fibers, silicon carbide and silicon nitride.

The coating preferably comprises or consists of at least one high refractive index layer, like a layer of metal oxide, such as, for example, $TiO_2$, $ZrO_2$, $SnO_2$, $ZnO$, $Ce_2O_3$, $Fe_2O_3$, $Fe_3O_4$, $FeTiO_5$, $Cr_2O_3$, $CoO$, $CO_3O_4$, $VO_2$, $V_2O_3$, $NiO$, furthermore of titanium suboxides ($TiO_2$ partially reduced with oxidation states from < 4 to 2, such as the lower oxides $Ti_3O_5$, $Ti_2O_3$, $TiO$), titanium oxynitrides, $FeO(OH)$, thin semitransparent metal layers, for example comprising Al, Fe, Cr, Ag, Au, Pt or Pd, or combinations thereof. The $TiO_2$ layer may be in the rutile or anatase modification. In order to obtain the rutile modification, an additive can be used which is able to direct the $TiO_2$ into the rutile modification. Useful rutile directors are disclosed in the U.S. 4,038,099 and U.S. 5,433,779 and EP 0 271 767. A preferred rutile director is $SnO_2$ The particles are particularly preferably are coated with one or more layers of metal oxides, preferably with one metal-oxide layer only, in particular with $TiO_2$, $Fe_2O_3$, $Fe_3O_4$, $SnO_2$, $ZrO_2$ or $Cr_2O_3$. Especially preferred are particles coated with $TiO_2$ or $Fe_2O_3$ and mixtures thereof.

However, other particles and/or other coatings are likewise conceivable. The particle and/or the coating particularly preferably correspond to commercially available products as they are known in the art.

It should be noted that the particle can comprise one or more coatings exhibiting different refractive indices and/or can comprise two or more parts defining interfaces that result in a mismatch in two or more refractive indices.

Additionally or alternatively the particle is preferably configured such, that electromagnetic radiation being incident on the particle undergoes constructive interference

The interface resulting in a mismatch in refractive indices and/or the coating having a different, in particular a larger, refractive index than a refractive index of the particle allows for constructive interference of the electromagnetic radiation being reflected from the particle.

Furthermore, in constructive interference, the reflection of electromagnetic radiation at interfaces between materials of different refractive indices is enhanced for specific wavelengths.

However, and as mentioned earlier, it is likewise conceivable that the particle is configured such, that electromagnetic radiation being incident on the particle differs from the electromagnetic radiation being thereafter yielded from the particle. Said difference can be a difference in one or more wavelengths of the electromagnetic radiation, e.g. because the particle undergoes absorption and/or fluorescence and/or phosphorescence processes. Said difference can however also lie in the beam direction along which the electromagnetic radiation is incident on the particle and thereafter yielded from the particle.

As such, the particle and/or the interface resulting in a mismatch in refractive indices and/or the coating are preferably chosen and/or designed so as to generate a particular characteristics of the composite material. In particular, it is preferred that a thickness of the coating is chosen and/or designed such as to generate a particular first characteristics and/or a particular second characteristics of the composite material. A thickness of the coating preferably is between 20-400 nm, more preferably between 30-300 nm, in particular 30-200 nm. It is furthermore preferred that the particle and/or that the interface resulting in a mismatch in refractive indices and/or that the coating are configured such, that the first characteristics and/or the second characteristics of the composite material corresponds to an iridescent color. An iridescent color is understood as a color that gradually changes as the angle of observation and/or the angle of illumination of the composite material changes. However, and as just mentioned, it is likewise conceivable that the particle has an intrinsic color and not or not only a structural color such an iridescent color, which intrinsic color results from absorption, fluorescence, or phosphorescence processes mentioned above. That is, the particle can exhibit a "pigmentary color" arising from absorption of electromagnetic radiation in the particle as it is known for pigments, dyes, and metals, for examples. It is likewise conceivable that the particle exhibits a "structural color" arising from interactions of electromagnetic radiation with various types of spatial inhomogeneity of the material structure as it is known for pearlescent pigments and thin films, for example. Structural colors may arise from ordered structures to produce angle-dependent color effects. This is the case of the particles in a composite material whose first characteristics and/or second characteristics corresponds to an iridescent color. Structural colors may also arise from disordered (but monodisperse) structures to produce angle-independent color effects. This is the case of photonic glasses, for example.

It should be noted that the above explanations regarding the composition of the particle itself as well as the composition of the coating of the particle apply to any geometry of the particles, e.g. to non-spherical as well as to spherical particles.

In this context it should be further noted that the coating can be provided as monodisperse particles, i.e. particles of the same size, preferentially metal oxides, preferentially with high refractive index (between 1.4-3.0). Examples: silica, titania, alumina. Their diameter is preferably in the range of 100-500 nm for producing color, i.e. being able to interact with electromagnetic radiation in the visible range. Diameters out of this range are preferably used to yield interactions of the particles with other ranges of electromagnetic radiation such as ultraviolet or infrared.

Hence, the particular characteristics or properties of the composite material is/are particularly preferably achieved by providing the coating with a particular thickness. In other words, it is preferred that a thickness of the coating is such that the first characteristics and/or the second characteristics of the composite material corresponds to a desired color. For example, particles consisting of alumina can be coated with different titania thicknesses to produce pearlescent pigments of different colors. Below there is a list of titania thickness and produced color for illustrative purposes:

- 40-60 nm, white/silvery
- 60-80 nm, yellow
- 80-100 nm, red
- 100-140 nm, blue
- 120-160 nm, green

The coatings are preferably deposited on the particles using state-of-the-art physical vapor deposition, chemical vapor deposition, sol-gel chemistry approach, oxidation reactions or any other chemical reaction that leads to a core-shell particle morphology.

The particle is preferably responsive to a magnetic field. Additionally or alternatively the particle preferably comprises at least one magnetic and/or at least one superparamagnetic component. That is to say, the particle preferably is magneto-responsive, i.e. configured to response to a magnetic field. To this end, the particle could be configured magnetic and/or superparamagnetic. However, it is preferred that the particle is non-magnetic. Instead, it is preferred that the particle comprises one or more magnetic and/or superparamagnetic components, which magnetic and/or superparamagnetic components are responsive to a magnetic field. In the latter case, a response of the magnetic and/or superparamagnetic components is transferred onto the particle such that said particle is (indirectly) responsive to the magnetic field as well. Being responsive to a magnetic field means the capability of being attracted by a magnetic field. As a consequence, the particle can be aligned in the matrix. This in turn allows an alignment of the surface of the particle with respect to the composite surface. This also allows an alignment of one or more particles with respect to one another, see also further below. Hence, the orientation of the particle with respect to the matrix and/or the orientation of particles with respect to one another is preferably achieved via an alignment of the particles.

The magnetic component can be attached to a surface of the particle, for example through van der Waals, electrostatic interactions and/or covalent bonds. The magnetic component can correspond to a nano-particle. The magnetic component particularly preferably corresponds to a magnetic and/or superparamagnetic nano-particle as disclosed in WO 2011/120643. The magnetic component can be distributed over an entire surface of the particle or only over a part of the surface of the particle. The magnetic component can be provided in the form of one or more layers, such as a multi-layer, and/or in the form of a coating. The magnetic component preferably corresponds to magnetic and/or superparamagnetic nanoparticles including, but not limited to, the following: iron oxide (such as $Fe_3O_4$, $Fe_2O_3$), cobalt, nickel, and derived alloys. These magnetic and/or superparamagnetic nanoparticles must be responsive to an applied magnetic field. Also, the magnetic and/or superparamagnetic nanoparticles are preferably generally in the size range of 1-200 nm in diameter. The magnetic component such as the magnetic or superparamagnetic nanoparticles are preferably applied on top of the coating that coats the particle, if any. However, it is likewise conceivable that the magnetic component is applied on the particle, and that the coating, if any, is thereafter applied on the magnetic component. Furthermore, it is also conceivable that the coating comprises the magnetic component. For instance, magnetic material is preferably used in pearlescent pigments, wherein the color is not only structural, but also pigmentary.

The alignment is preferably effectuated prior to and/or during solidification and/or polymerization and/or cross-linking of the matrix. As will be explained in further below and as is disclosed in WO 2011/120643, the alignment of the particle within the matrix is particularly preferably achieved by applying at least one magnetic field so as to align the magnetic and/or superparamagnetic (possibly coated) particles prior to and/or during solidification and/or polymerization and/or cross-linking of the matrix.

The composite material preferably comprises at least one further particle. The further particle preferably comprises at least one interface, wherein the interface of said further particle results in a mismatch in refractive indices being associated with the further particle, and wherein said interface of the further particle is the same as or different from an interface of the particle resulting in a mismatch in refractive indices being associated with the particle. Additionally or alternatively the further particle preferably comprises at least one coating being the same as or different from a coating of the particle. Additionally or alternatively the further particle preferably has an orientation with respect to the composite material being the same as or different from an orientation of the particle with respect to the composite material. Additionally or alternatively the particle and the further particle are preferably aligned with respect to one another at a given angle.

That is to say, the matrix preferably comprises two or more particles, and wherein said two or more particles can be the same or different from one another. It is particularly preferred that the matrix comprises a plurality of particles.

For example, when the matrix is in its first state of deformation, the further particle can be configured to at least partially reflect and/or absorb and/or emit electromagnetic radiation being incident on the further particle, and wherein said electromagnetic radiation can be the same as or different from electromagnetic radiation being reflected and/or absorbed and/or emitted from the particle when the matrix is in its first state of deformation. Additionally or alternatively, when the matrix is in its second state of deformation, the further particle is preferably configured to at least partially reflect and/or absorb and/or emit electromagnetic radiation being incident on the further particle, and wherein said electromagnetic radiation can be the same as or different from electromagnetic radiation being reflected and/or absorbed and/or emitted from the particle when the matrix is in its second state of deformation. Different electromagnetic radiations could differ in their wavelengths, their intensities, their polarizations, their beam directions etc. To this end it is conceivable that the first characteristics of the composite material when the matrix is in its first state of deformation comprises the electromagnetic radiation being reflected and/or absorbed and/or emitted from the particle as well as the electromagnetic radiation being reflected and/or absorbed and/or emitted from the further particle. Likewise, it is conceivable that the second characteristics of the composite material when the matrix is in its second state of deformation comprises the electromagnetic radiation being reflected and/or absorbed and/or emitted from the particle as well as the electromagnetic radiation being reflected and/or absorbed and/or emitted from the further particle. However, it is also conceivable that the further particle is configured to at least partially reflect and/or absorb and/or emit electromagnetic radiation being incident on the further particle when the matrix is in at least one further state of deformation being different from the first state of deformation and from the second state of deformation. In this case, the composite material exhibits a further characteristics when the composite material is in its further state of deformation. The composite material could be transferred into its further state of deformation upon the application of a further force, wherein said further force acts along a direction being different from the direction of the force, for example. For instance, the force could be applied along the extension direction of the composite material, and the further force could be applied along a direction running perpendicularly to the extension direction. In this case, by stretching the matrix along different directions, different properties of the composite material being provided by the different particles could be achieved. Furthermore, depending on the electromagnetic radiation being reflected and/or absorbed and/or emitted from the further particle such as a wavelength of said electromagnetic radiation, the further characteristics of the composite material can be the same as or different from the first characteristics and/or the second characteristics of the composite material. For example, the first characteristics could be provided by means of the particle reflecting a first color such as blue, the second characteristics could be provided by said particle reflecting a second color such as green, and the third appearance could be provided by the further particle reflecting a third color such as red, etc.

Such a difference in the reflected electromagnetic radiation can be achieved in various ways. For example, the particle and the further particle can differ in the one or more constituents that constitute the coating of the particle. Additionally or alternatively, the coating of the particle and the coating of the further particle can be provided by the same one or more constituents, wherein however a thickness of these coatings is different. Additionally or alternatively the at least one further particle can have the same shape as or a different shape than the particle. In the latter case, one or more particles could have the shape of a platelet and one or more particles could have the shape of a rod, for example.

Additionally or alternatively the at least one further particle and the particle can be aligned with respect to one another at a given angle. Particles being aligned with respect to one another are preferably arranged at a particular orientation with respect to one another. For example, the particle can define at least a first axis and the further particle can define at least a further axis, and wherein said first axis and said further axis are arranged at a particular orientation with respect to one another. For example, the first axis and the further axis could extend parallel to one another or at an angle with respect to one another. In other words, the particle and the further particle are preferably oriented or aligned at a given angle. These axes could, for example, in each case be a central longitudinal axis of the particle. Another example would be axes that run perpendicular to a surface of the particle, i.e. axes running parallel to the surface normal. Additionally or alternatively the particles being arranged at a particular orientation could in each case comprise at least one surface, which surfaces run parallel or at an angle with respect to one another. Said surface of the particle preferably corresponds to the surface of the particle having the largest surface area or the largest geometrical extent, see above. An angle between the axes and/or an angle between the surfaces of the particles preferably is about 90°. In other words, the particles are preferably arranged offset with respect to one another by 90°.

The alignment of the particles at a given angle is preferably achieved via controlling their coverage with the magnetic components mentioned above and by doing an alignment as it is disclosed in WO 2011/120643, for example. Furthermore, if one wishes to fix the alignment to a single step, angles between particles could be achieved as follows. Example 1: a container such as a flask containing a suspension of particles in curable matrix can be rotated and preferably also heated such that the rotation axis is concentric to the container. This yields a cylindrical alignment of the particles. Example 2: an electric field passing through an electrical conductor such as a straight copper wire creates a cylindrical magnetic field around the wire. Additionally or alternatively the particles being arranged at a particular orientation with respect to one another are preferably arranged within the matrix such, that at least one surface of one of the particles at least partially faces at least one first direction of a force being applied to the composite material and that at least one surface of the other particle at least partially faces at least one second direction of a force being applied to the composite material, wherein the first direction is different from the second direction. In other words, the particles are preferably arranged such that the application of a force such as imposed strain predominantly acts on those particles such as activates a rotation of those particles that are oriented or aligned in a particular manner with respect to the direction of the force. To this end it is particularly preferred that the particles, in particular their surfaces such as the surfaces of the largest extent are oriented or aligned such as to be perpendicular to the direction of the force, e.g. the loading direction. Those particles, which are not aligned in said particular manner with respect to the direction of the force, e.g. particles whose surfaces having the largest extent are oriented or aligned parallel to the direction of said force, are preferably not or only to a little extent affected by said force. However, if the force is applied along another direction, in particular along a direction acting perpendicularly to the surfaces of the particles having the largest extent, these latter particles are preferably affected, whereas the former particles are preferably not or only to a little extent affected. Consequently, by providing particles being oriented or aligned differently the composite material exhibits a deformation-induced characteristics such as reflectance and/or absorption and/or emission being dependent from the direction along which the force acts upon the composite material.

The composite material preferably comprises at least two further particles, and wherein an orientation of the at least two further particles with respect to the particle and/or with respect to the composite material is the same or different from one another. That is to say, the matrix can comprise at least three or more particles, and wherein an orientation, in particular an alignment, of these particles with respect to one another can be the same or different. In fact, it is conceivable to provide a plurality of particles, and wherein an orientation of some of or of all of these particles with respect to one another is the same or different. A same orientation could be achieved by a same angle being enclosed between adjacent particles. Additionally or alternatively a same orientation could be achieved by a same angle being enclosed between two adjacent particles and the matrix, in particular the composite surface. Consequently, a different orientation could be achieved by different distances being established between adjacent particles and/or by different angles being enclosed between adjacent particles and/or by different angles being enclosed between a particular particle and the matrix or the composite surface. To this end it is particularly preferred that said distance or said angle is determined with respect to a surface of the particle, in particular with respect to the surface of the particle having the largest surface area or the largest geometrical extent, see above.

It is furthermore preferred that two or more particles are organized in at least one array and/or in at least one pattern. Particles being organized are particles having a deliberate or specific orientation with respect to one another and/or with respect to the matrix and/or with respect to the composite surface. Moreover, particles being organized in an array and/or in a pattern are preferably arranged and/or configured such that a deformation of the matrix results in a same change of orientation of these particles with respect to one another and/or with respect to the matrix and/or with respect to the composite surface. That is, the particular organization of the particles enables a common change in the orientation of the particles such as a common shift along one or more spatial directions and/or a common rotation about one or more axes of rotation, etc. upon the application of a particular force such as a force being applied along a particular direction. Hence, particles being organized in arrays and/or patterns with a deliberate orientation can be manipulated by a common imposed force such as strain to reversibly change the reflected colour. Again in other words, particles being organized in patterns and/or arrays allow for a selective change of the particle orientation such as a rotation of the particles depending on the stretching orientation of the matrix. Additionally or alternatively particles being organized in an array and/or in a pattern are preferably arranged and/or configured such that they exhibit a same characteristics when the matrix is in a particular state of deformation.

Hence, the composite material according to the invention enables a force modulated, in particular a strain-modulated characteristics change such as a color change in soft composites containing pre-aligned particles. To this end the composite architecture preferably comprises particles being spatially distributed in patterns or arrays, aligned at specific angles and coated with a preferably high-refractive index coating. Deforming such as stretching of the composite material distorts the initial particle architecture, leading to a collective change in the orientation such as a rotation of at least some of the particles and the creation of a characteristics such as a color through optical phenomena such as constructive optical interference.

The particles are preferably provided according to a particular orientation that is achieved by aligning the particles. As mentioned above, said alignment is preferably effectuated prior to and/or during solidification and/or polymerization and/or cross-linking of the matrix. It is furthermore preferred that the alignment of the particles is achieved according to the method being disclosed in WO 2011/120643. The alignment of the particles with respect to one another is preferably achieved simultaneously with the alignment of the particles with respect to the matrix.

For example, in order to obtain a first set of particles being oriented according to a first alignment and a second set of particles being oriented according to a different second alignment, both sets of particles could be coated with a first coating so as to become magneto-responsive. For example, said coating could be provided by small quantities (0.001-0.005 vol.-%) of superparamagnetic iron oxide nanoparticles (SPIONs). In order to differently align the first and second sets of particles, a different magneto-responsive is desired. This could be achieved by functionalizing, i.e. coating, the particles with different SPION concentrations in order to tune their magnetic response and thus align them in distinct orientations.

Furthermore, in order to obtain composite materials exhibiting two or more properties two or more sets of particles could be coated with a second coating such as titania coating, wherein a thickness of the coating and thus a reflection behaviour is different.

The matrix preferably comprises at least a first region and a second region, wherein the first region comprises one or more particles and the second region comprises one or more particles, and wherein the one or more particles in the first region are at least partially the same as or different from the one or more particles in the second region. The different regions of the matrix preferably correspond to spatially separated regions. Characteristics of the matrix in the different regions can be the same or different from one another. For example, it is conceivable that the regions differ in their Young's modulus and/or bulk modulus and/or shear modulus and/or the one or more polymers and/or copolymers thereof that form the matrix.

The difference between the particles in the first and second regions are preferably differences as outlined above. For example, the particles could differ in their interfaces resulting in a different mismatch in refractive indices and/or in their coatings and/or in their magnetic components and/or in their superparamagnetic components and/or in their orientation with respect to the matrix and/or in their orientation with respect to the composite surface and/or in their orientation with respect to one another. These different particles are preferably arranged in different regions of the composite material, in particular in different regions of the matrix. Hence, the different particles can be arranged in spatially separated regions of the matrix, e.g. different particles being arranged in regions of the matrix that differ in their Young's modulus. This is in contrast to different particles being arranged within a same region of the matrix, e.g. different particles being arranged in a region of the matrix that has consistent characteristics i.e. that is uniform. In the former case, distinct color changes within different regions of the composite material can be achieved. Depending on the particular characteristics of the particles in the first and second regions such as their orientation, it is furthermore conceivable that the particles of the first region or the particles of the second region are unveiled upon a particular deformation such as stretching of the matrix.

It is furthermore conceivable that the matrix comprises one or more structural elements such as in the form of a surface structure or a deep structure. Said structural element can have the form of an alphanumeric character and/or image. Different regions of the matrix could therefore correspond to a region with and a region without a structural element. Another example would be a region of the matrix comprising a first structural element such as a name and a second region of the matrix comprising a different structural element such as an image. As outlined above, these regions and/or the particles being present in these regions can be the same or different from one another.

Such a composite material could be manufactured by using several for example two sets of different particles that are aligned in different directions with respect to the matrix using magnetic fields. To generate a structural element a first suspension e.g. of one or more polymers or copolymers thereof, and a first set of particles could be cast in a mold comprising the negative shape of the desired first structural element in a first step. A rotating magnetic field could be used to align the particles in a specific orientation while the suspension is cured. The resulting composite material with the structural element can thereafter be removed from the mold and can be placed into a second mold. In a second step, said second mold containing the cured composite material can be filled with a further suspension containing either the same or different particles. The final composite material can then be generated by imposing a rotating magnetic field to align the second set of particles with respect to the first set of particles, followed by curing of the second suspension.

In another aspect a composite material as described above is used as a flexible device. The flexible device preferably is a stretchable display and/or a soft actuator and/or a sensor and/or a medical device and/or a toy and/or a robot.

In another aspect a flexible device comprises or consists of at least one composite material as described above. The flexible device preferably is a stretchable display and/or a soft actuator and/or a sensor and/or a medical device and/or a toy and/or a robot.

Hence, the composite material according to the invention is preferably used as and/or used as a part of a complex macroscopic device. For instance, it could be used as a smart stretchable display that selectively changes its characteristics such as its color depending on a direction of force being applied. Since the characteristics of the composite material and thus of the display can be effected using standard illumination such a display corresponds to a low-power stretchable display. Another example concerns its implementation in an air-driven soft actuator, in particular a soft robotic actuator, that changes color when inflated. In contrast to the power-hungry camouflaging strategies known from the prior art, such a soft actuator can simultaneously morph and change characteristics using just pressure that deforms the composite material as the single input. Examples of a sensor are a soft conformal patch that can be applied onto a surface of interest in order to sense a topography of the surface. In fact, said topography can be sensed through local color variations in the patch when put in contact with the surface of interest and sheared. Another example of a sensor is a tactile sensor as it finds application in synthetic skins of robots, for example. In this case the tactile sensor could provide the synthetic skin of the robot with proprioceptive skills to sense, self-orient and interact with unstructured environments. The orientation-dependent color changes of the composite material according to the invention allows the skin to sense the direction of an imposed force such as an imposed mechanical stimulus. It is furthermore conceivable to quantify a pressure and/or shear on the skin by determining an increase in reflectance of the particle-containing composite material. The dependence of the reflectance on the pressure direction and/or the shearing direction provides sense of orientation. Hence, the flexible device preferably comprises at least one detection device that is configured to detect the electromagnetic radiation being reflected from the particle. The detection unit could correspond to a photosensitive diode, for example. The flexible device preferably furthermore comprises at least one evaluation unit that is configured to evaluate the detected electromagnetic radiation. The flexible device preferably further comprises a storage device in which one or more reference data is stored. The evaluation unit is preferably configured to evaluate the detected electromagnetic radiation based on a comparison of said detected electromagnetic radiation with the reference data. The reference data is preferably obtained from a controlled mechanical stimulus of the composite material.

In another aspect a method of manufacturing a composite material, preferably a composite material as described above, is provided. The method comprises the steps of i) providing a matrix, and ii) providing at least one particle. The matrix is deformable and is configured to adopt at least a first state of deformation and a second state of deformation being different from the first state of deformation upon an application of a force to the composite material. The particle is in connection with the matrix. The composite material exhibits at least a first characteristics when the matrix is in its first state of deformation and in that the composite material exhibits at least a second characteristics when the matrix is in its second state of deformation, wherein the first characteristics differs from the second characteristics.

Any statements made herein with regard to the composite material, the use of the composite material, or the flexible device comprising or consisting of the composite material likewise apply to the method of manufacturing the composite material and vice versa.

As mentioned earlier, the particle is preferably oriented with respect to the matrix and/or with respect to further one or more particles.

The method preferably further comprises the step of aligning the particle with respect to the matrix. Additionally or alternatively the method preferably further comprises the step of providing at least one further particle and aligning said further particle with respect to the particle, the further particle preferably being different from the particle.

As also mentioned earlier, said orientation is preferably achieved by aligning the particles, particularly preferably as outlined in WO 2011/120643.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1a    shows schematic sectional views of a composite material comprising particles in an undeformed state (left view) and in a deformed state upon application of a deformation force (right view);

Fig. 1b    shows a schematic view of a composite material comprising particles (lower view); it furthermore shows an enlarged schematic partial view of said composite material (middle view); it furthermore shows a partial sectional view of said composite material, wherein electromagnetic radiation is incident on the particle and is reflected from the particle (top view);

Fig. 2a     shows a schematic view of a magnetic alignment setup used to control the orientation of particles in the composite material;

Fig. 2b     shows another schematic view of a magnetic alignment setup used to control the orientation of particles in the composite material;

Fig. 2c     shows photographs depicting color changes of the composite material upon a deformation. The insets depict the orientation of the particles embedded within the composite in the undeformed state (left inlet) and after stretching by 300% (right inlet);

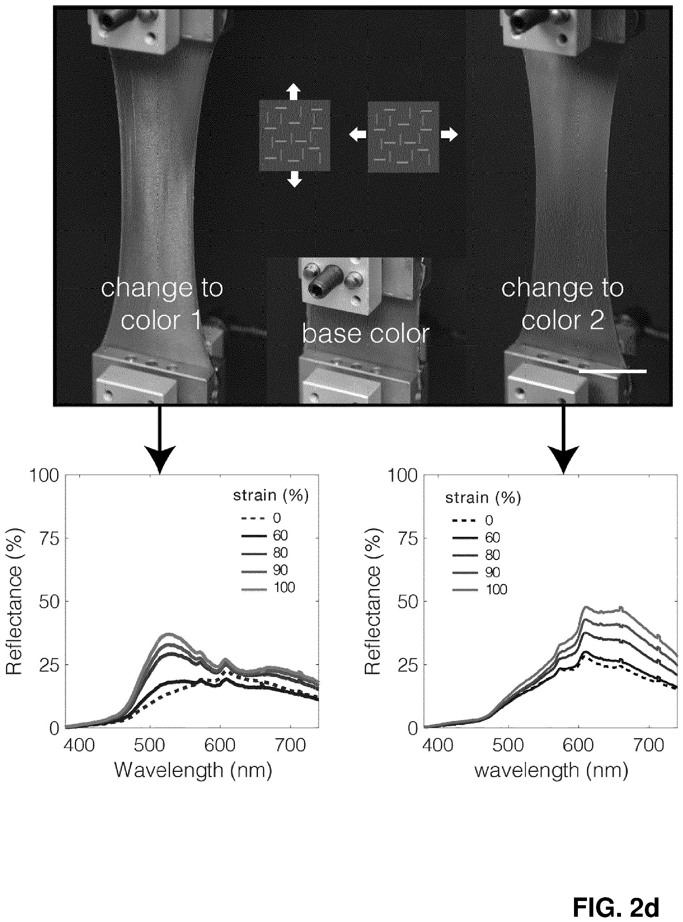

Fig. 2d     shows optical images of a composite material comprising turquois and red particles in an undeformed state (middle photograph) and the composite material when stretched along the direction that activates the turquoise particles (left photograph) or the red particles (right photograph); it furthermore shows two diagrams depicting a wavelength-dependent reflectance of a composite material comprising red and turquoise particles being arranged with respect to one another in orthogonal orientations, wherein strain of different magnitudes is applied to the composite material, and wherein the composite material is stretched along the direction that activates the turquoise particles (left diagram) or wherein the composite material is stretched along the direction that activates the red particles (right diagram);

Fig. 3a     shows optical microscopy images of an individual particle embedded in a composite material subjected to increasing tensile strains (left view); it furthermore shows the periodic unit cell used to simulate the tilting of the particles to indicate the planes of the snapshots relative to the stretching direction (right view);

Fig. 3b     shows snapshots of finite element simulations of a $100 \times 100 \times 100 \ \mu m^3$ periodic unit cell with 16 particles, which corresponds to a fraction of 1 wt.-% in the composite material, the effect of the stretching direction on the angle of the particles is shown by comparing snapshots taken from different planes;

Fig. 3c     shows a diagram depicting the angle of an individual particle as a function of the tensile strain applied to the composite material, wherein experimental data are compared with predictions from a geometrical model and from finite element simulations;

Fig. 3d     shows a diagram depicting the effect of the applied tensile strain on the macroscopic mean reflectance of the composite material in the wavelength range 490-550 nm measured at a fixed angle of 45° relative to a surface of the composite material;

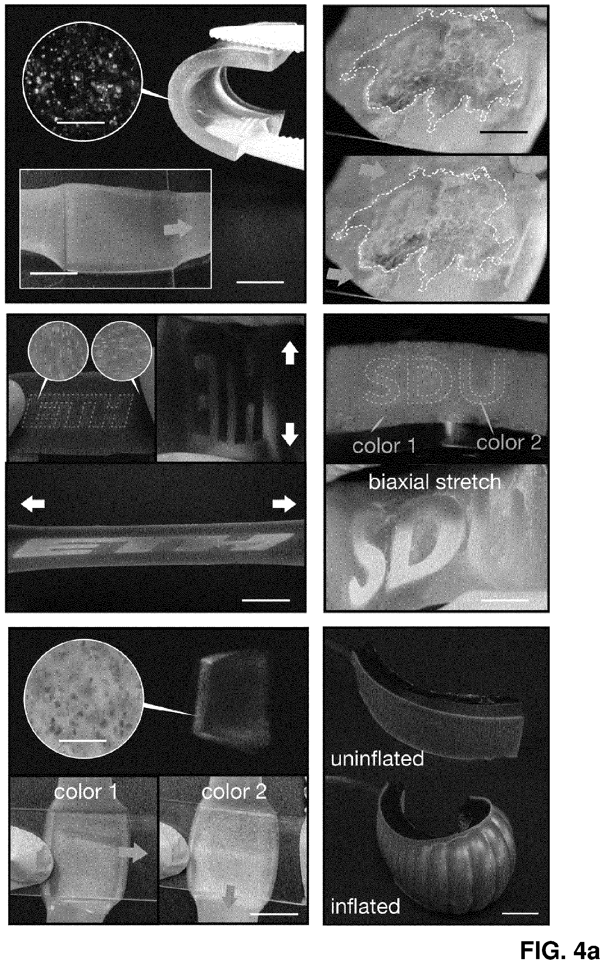

Fig. 4a     shows photographs of composite materials being implements as soft devices and functionalities of composite materials with strain-modulated architectured color. The upper left view depicts color-changing soft composite materials prepared with a double-network hydrogel as the polymer matrix, wherein the sample containing one type of particles were acid-washed to remove the SPIONs and become highly transparent in the unstretched state. A vivid color emerges by simply shearing the composite along the normal direction of the particle. The inset depicts an optical microscopy image of the coated particles embedded in the hydrogel matrix. A vivid color emerges by simply shearing the composite along the particle normal direction. The upper right view depicts a composite material in the form of a soft composite patch that can optically sense the topography of a three-dimensional rigid object. The increased height of the Alps in the map of Switzerland is detected by the pink color that emerges when the patch is conformed on the object surface and sheared. The middle left view depicts the composite material in the form of a smart stretchable display with orientation-dependent color effects obtained using one type of particles aligned in specific directions in the soft composite material, and wherein, the arrows indicate the stretching direction. The middle right view depicts the composite material in the form of a smart stretchable display with orientation-dependent color effects obtained using two types of particles aligned in specific directions in the soft matrix. The lower left view depicts color-changing composite materials prepared with a double-network hydrogel as the polymer matrix, wherein samples containing two types of particles were acid-washed to remove the SPIONs and become highly transparent in the unstretched state. As shown, architectures with two types of particles lead to different strain-activated colors, depending on the stretching direction. The lower right view depicts composite materials being implemented in an air-driven soft robotic actuator that spontaneously changes color upon inflation;

Fig. 4b     shows a diagram depicting an increase in reflectance of the particle-containing composite upon the application of pressure on the composite material being implemented as synthetic skin;

Fig. 4c     shows a diagram depicting an increase in reflectance of the particle-containing composite upon the application of shear on the composite material being implemented as synthetic skin. The dependence of the reflectance on the shearing direction provides sense of orientation;

Fig. 5     shows a light microscopy image of 2D aligned particles in a silicone-based soft composite material, wherein the scale bar is 50 $\mu m$ ;

Fig. 6     shows a removal of SPIONs from hydrogel-comprising composite materials using chemical etching, wherein the left views depict hydrogel samples with different volume concentrations of aligned red particles before and after etching in a 50 wt.-% phosphoric acid solution, and wherein the right views depict sections of hydrogel samples after etching, illustrating the removal of the brownish color of SPIONs, and wherein the scale bar is 2 cm;

Fig. 7a     shows an example of a mesh used in a Finite Element (FE) simulation of particle-laden soft composite materials;

Fig. 7b     shows a diagram depicting stress-strain curves of a silicone-based composite material obtained from an experiment and compared to FE simulations;

Fig. 7c     shows a diagram depicting the mechanical behavior according to FE simulations;

Fig. 7d     shows a diagram depicting the mean orientation of the particles according to FE simulations;

Fig. 7e     shows deformed configurations of five different composite material samples with distinct random placement of particles at 100% strain;

Fig. 7f     shows a simulated configuration of particles before and after the application of a tensile strain of 100% in a composite material containing particles with distinct initial angles $\theta_0$;

Fig. 7g     shows a diagram depicting simulated stress as a function of the applied strain for composite materials with different initial particle angles;

Fig. 7h     shows a diagram depicting simulated particle angle as a function of the applied strain for composite materials with different initial particle angles, wherein the reported angles for $\theta_0 = 0°$ are the mean of absolute values;

Fig. 8a     shows a photograph of a UV-cured hydrogel composite material, wherein the composite material corresponds to pure hydrogel, and wherein the scale bars is 2 cm;

Fig. 8b     shows a photograph of a UV-cured hydrogel composite material, wherein the composite material corresponds to hydrogel being filled with aligned turquoise particles, and wherein the scale bars is 2 cm;

Fig. 9a     shows a photograph of a hydrogel composite material comprising aligned reflective particles whose size is ompared to a 5.- CHF coin;

Fig. 9b     shows a cross-section of a hydrogel sample with 0.016 vol.-% aligned red particles, wherein the scale bars is 1 mm;

Fig. 9c     shows a cross-section of a hydrogel sample with 0.016 vol.-% aligned red particles, wherein the scale bars is 200 $\mu$m;

Fig. 10a     shows a light microscopy images over 100 $\mu$m through the thickness of a silicone-based soft composite material being filled with 0.034 vol.-% of particles aligned out of plane, and wherein the scale bar is 100 $\mu$m ;

Fig. 10b     shows a light microscopy images over 100 $\mu$m through the thickness of a silicone-based soft composite material being filled with 0.068 vol.-%, of particles aligned out of plane, and wherein the scale bar is 100 $\mu$m;

Fig. 10c     shows a light microscopy images over 100 $\mu$m through the thickness of a silicone-based soft composite material being filled with 0.1 vol.-%, of particles aligned out of plane, and wherein the scale bar is 100 $\mu$m.

## DESCRIPTION OF PREFERRED EMBODIMENTS

Colors enable interaction and communication between living species in a myriad of biological and artificial environments. While living organisms feature low-power mechanisms to dynamically control color in soft tissues, man-made color-changing devices remain predominantly rigid and energy-intensive. Herein below, soft architectured composite materials 1 according to the invention that display striking color changes when stretched in selective directions under ambient light with minimum power input are presented in greater detail. The orientation-dependent color change results from the rotation of reflective coated particles 3, 3a, ... that are embedded in a soft polymer matrix 2 and pre-aligned in a well-defined architecture. The light reflected by the particles 3, 3a, ... generates structural color defined by a coating 7, here an oxide coating 7, being present on the surface 4 of the particles 3, 3a, ... By magnetically programming the initial orientation and spatial distribution of selected particles 3, 3a, ... within the soft matrix 2, composite materials 1 with strain-modulated color-changing effects that cannot be achieved using state-of-the-art technologies were generated. The concept of strain-induced architectured color can be harnessed to develop flexible devices 8 such as low-power smart stretchable displays, tactile synthetic skins and autonomous soft robotic devices that undergo fast and reversible color changes through the mechano-optic coupling programmed within their soft composite architecture.

In fact, elastomer-based composite materials 1 were designed and manufactured featuring a programmable particle architecture that enables fast and reversible color changes upon mechanical deformation of the matrix 2 without the need of an external power source. Inspired by the dynamic coloration mechanisms of fish, the color of the composite materials 1 according to the invention depends on the local orientation and architecture of reflective particles 3, 3a, ... being embedded in a polymer matrix 2. Color changes arise from the re-orientation of the particles 3, 3a, .... driven by an externally applied mechanical strain. The concept of architectured color introduced in the present invention is eventually exploited to create composite materials 1 that take different colors depending on the strain orientation and that can sense mechanical forces based on a simple powerless optical readout. Analogous to architectured materials designed for mechanical applications, the color-changing composite materials 1 according to the invention exhibit properties, in particular optical properties, that are governed by structural features arising from multiple length scales. At the nanoscale, the individual particles 3, 3a, ... are covered with at least one layer of high refractive index material 7 to allow for constructive interference of the reflected light. Moving to coarser length scales, the individual particles 3, 3a, ... are organized in arrays with a deliberate orientation, which is manipulated by the imposed strain to reversibly change the reflected color. Finally, particle arrays are organized in patterns with specific orientations to allow for the selective particle tilting, i.e. rotation, depending on the stretching orientation. Such multiscale particle architecture is embedded in a highly stretchable elastomer matrix that translates the externally applied strain into a rotational motion of the particles 3, 3a, .... By rotating the particles 3, 3a, ..., the applied strain reconfigures the composite architecture thus changing the intensity and the wavelength of the reflected light, following the Venetian blind mechanism. In contrast to the color changes observed in the Neon tetra fish, for example, the structural color in the composite materials 1 according to the invention is not created by controlling the separation between particles 3, 3a, .... Instead, the particles 3, 3a, ... according to the invention are coated with at least one high refractive index layer 7, the thickness of which is designed to generate the desired color such as an iridescent color as in a one-dimensional photonic crystal.

With reference to the figures, aspects of the composite material 1 according to the invention shall be discussed in greater detail.

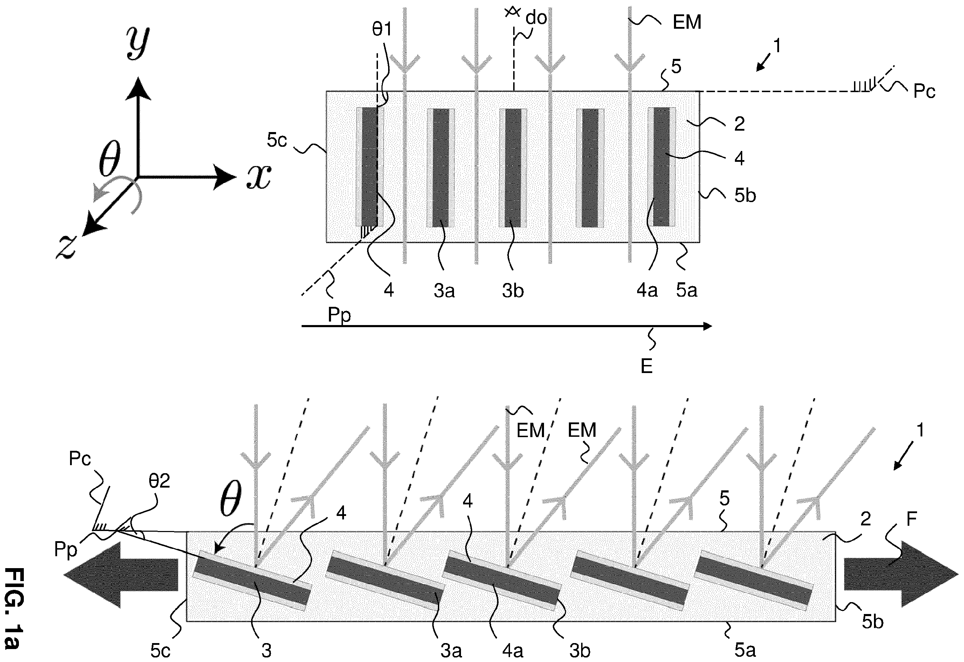

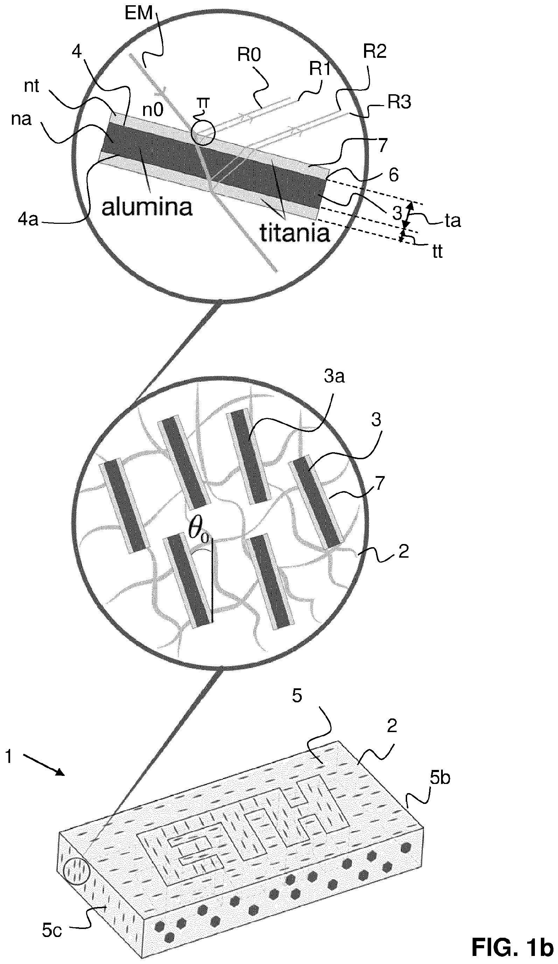

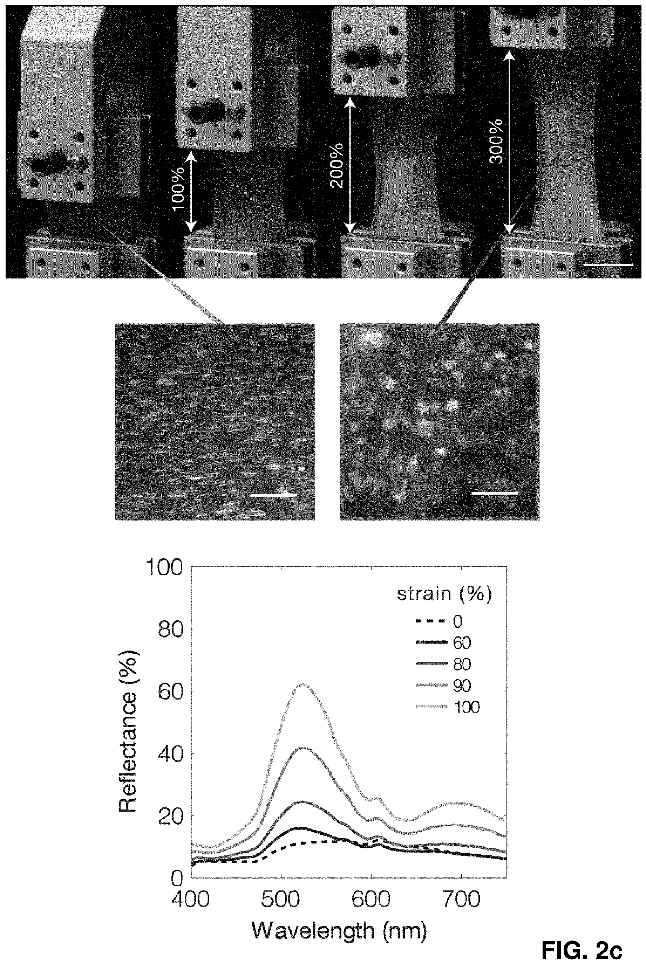

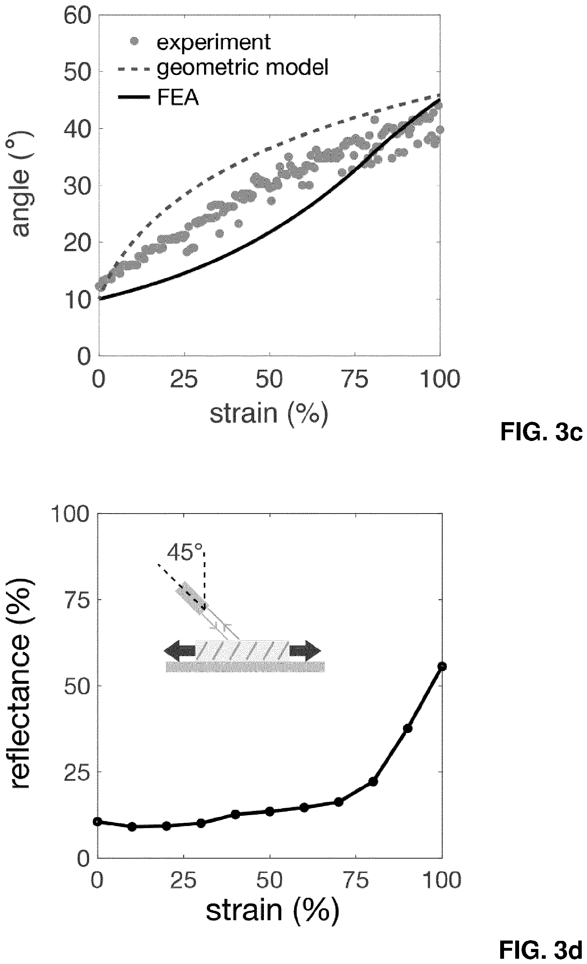

As best seen in figures 1a and 1b, the composite material 1 according to the invention comprises a matrix 2 and several particles 3, 3a, ... being in connection with the matrix 2. In the depicted example the particles 3, 3a, ... are embedded within the matrix 2. As follows from a comparison of the left and right views depicted in figure 1a, the matrix 2 is deformable and is configured to adopt at least a first state of deformation and a second state of deformation being different from the first state of deformation upon an application of a force F to the composite material 1. Here, the first state of deformation can be identified with the undeformed state of the matrix 2 in the absence of a force F depicted in the left view of figure 1a and the second state of deformation can be identified with the deformed state of the matrix 2 upon the application of a force F depicted in the right view of figure 1a. The composite material 1 has here an essentially rectangular shape and comprises a top surface 5, an opposing bottom surface 5a and four side surfaces 5b, 5c. The particles 3, 3a, ... have an essentially two-dimensional or flat shape and in each case comprises a surface 4, 4a having a surface area that extends along a first plane (here: the yz-plane in the left view of figure 1a) being larger than a surface area extending along a second plane (here: the xy-plane in the left view of figure 1a) running perpendicularly to the first plane as well as larger than a surface area extending along a third plane (here: the xz-plane in the left view of figure 1a) running perpendicularly to the first plane and the second plane. As furthermore follows from the left and right views of figure 1a, the particles 3, 3a, ... are configured to adopt at least a first state of orientation when the matrix 2 is in its first state of deformation and to adopt at least a second state of orientation being different from the first state of orientation when the matrix 2 is in its second state of deformation. In fact, the application of the force F on the composite material 1 results in a rotation of the particles 3, 3a, .... about an axis of rotation as well as in a spatial displacement of the particles 3, 3a, .... Two opposing surfaces of the particles 3, 3a,..., here the surfaces 4, 4a having the largest surface area or the largest geometrical extent as mentioned above, face the directions of the force F when said force F is applied to the composite material 1. Said rotation or change in orientation of the particle 3, 3a, .... occurs with respect to at least one surface 5 of the composite material 1. In fact, and as also becomes apparent from a comparison between the left and right views of figure 1a, the composite material 1 comprises at least one composite surface 5, here the top surface 5 of the composite material 1, and the particle 3, 3a, ... comprises at least one surface 4, here the surface 4 having the largest surface area or the largest geometrical extent. A plane Pp running through said surface of the particle can be defined and a plane running through said top surface of the composite material can be defined. When the matrix is in its first state of deformation as depicted in the left view of figure 1a, the plane Pp running through said surface 4 of the particle is parallel to the yz-plane in the left view of figure 1a and the plane Pc running through said top surface 5 of the composite material 1 is parallel to the xz-plane in the left view of figure 1a. The plane Pp running through the surface 4 of the particle and the plane Pc running through the top surface 5 of the composite material 1 enclose a first angle $\Theta 1$. When the matrix 2 is in its second state of deformation as depicted in the right view of figure 1a, the plane Pp running through said surface 4 of the particle and the plane Pc running through said top surface 5 of the composite material 1 enclose a second angle $\Theta 2$ which is different from the first angle $\Theta 1$. In fact, the second angle $\Theta 2$ is smaller than the first angle $\Theta 1$. Moreover, in a used state of the composite material 1 as depicted in figure 1a, the top surface 5 of the composite material 1 faces a user (not depicted), and wherein said top surface 5 of the composite material 1 is arranged at a direction of observation do under which a user observes the composite material 1. In this used state, the top surface 5 of the composite material 1 is arranged such that electromagnetic radiation EM is incident on the top surface 5 of the composite material 1. As readily follows from figure 1a, the application of the force F rotates the particle 3, 3a, ... and thus the surface 4 of the particle towards the top surface 5 of the composite material 1. As a consequence, the particles 3, 3a, ... are configured to reflect an increasing amount of incident electromagnetic radiation EM due to the increase of the reflecting surface area provided by the surface 4 of the particle as the composite material 1, in particular the matrix 2 is deformed such as stretched. Hence, and as will be explained in greater detail with reference to figures 2c, 2d, 3d. 4b and 4c, the composite material 1 exhibits a first characteristics, here a first reflectance, when the particle 3, 3a, ... is in its first state of orientation and a second characteristics, here a second reflectance, when the particle 3, 3a, ... is in its second state of orientation being different from the first characteristics.

Thus, in summary it can be said that figure 1a illustrates the mechanism responsible for the strain-modulated color change in soft composite materials 1 comprising a matrix 2 that contains pre-aligned reflective particles 3, 3a, ... according to the invention. The left view of figure 1a depicts the composite material 1 in a first state of deformation, which is here an undeformed state of deformation. That is, no deformation force F is being applied to the composite material 1, in particular to the matrix 2. In the right view, however, a deformation force F is being applied to the composite material 1 in order to transfer the matrix 2 from its first state of deformation into a second state of deformation. Said deformation force F results here in a stretching of the matrix 2 along the extension direction E. As becomes readily apparent from a comparison of the left view and the right view, the stretching of the composite material 1 distorts the initial particle architecture, leading to a collective rotation of the particles 3, 3a, ... and the creation of color through constructive optical interference as is indicated by the electromagnetic radiation EM being impinging on the particles 3, 3a, ... and thereafter being reflected from the particles 3, 3a, ....

Figure 1b depicts a composite material 1 comprising a multiscale architecture comprising a matrix 2 within which particles 3, 3a, ... are spatially distributed in patterns, aligned at specific angles and coated with a high-refractive index layer 7 at progressively smaller length scales. That is, the entire composite material 1 can have multiple length scales. From a large to small length scale these are: macroscopic patterns with or without particles 3, 3a, ..., a local orientation of the particles 3, 3a, ..., a coating 7 on the surface 4, 4a, ... of the particles 3, 3a, .... In the present example, the reflective particles 3, 3a,... correspond to submicron thick alumina particles being coated with a titania layer 7 as model reflective particles. Using particles 3, 3a, ... with distinct titania layer thicknesses, structural colors varying from turquoise to red were generated. In other words, the particles 3, 3a, .... comprise interfaces 6 being formed between two parts of the particle, and wherein said interfaces 6 result in a mismatch in refractive indices being associated with the first part and the second part. In the present example, said interfaces 6 are provided between the coating 7 and the surfaces 4, 4a, ... of the particles. Hence, the first part of the particle can be identified with the particle itself and the second part of the particle can be identified with the coating 7. The coating 7 has a refractive index being different from the refractive index of the particle 3, 3a, .... These different refractive indices result the fact that electromagnetic radiation EM being incident on the particle 3, 3a,... undergoes constructive interference.

The interaction of light with the coated particles generates a pearlescent effect that arises from the phenomenon of constructive optical interference. In constructive interference, the reflection of light at interfaces between materials of different refractive indices is enhanced for specific wavelengths. The wavelength at which constructive interference occurs depends on the refractive indices and on the thickness of the particle coating. To estimate the effect of the coating thickness ($t_t$) on the wavelength of light expected to be reinforced through constructive interference, a model commonly used to describe optical interference from thin films has been applied to the particle system according to the invention. The particle is assumed to consist of an alumina disk with a thickness $t_a$ of 250 nm coated with a thin layer of titania. As light travels through the particle, it is partially reflected at each interface and the resulting reflections are recombined at the front surface. Constructive interference between reflected waves happens when the relative travelled distance is a multiple of the light wavelength in the medium. If the light wave traveling through a medium A is reflected at the interface with a medium B of higher refractive index ($n_B > n_A$), it undergoes a phase change of $\pi$ radians. If the medium B has a lower refractive index ($n_B < n_A$), light does not undergo phase changes. Similarly, if the light wave is further reflected at the interface between media B and C, the phase change is determined by the refractive indices of the media. In this configuration, the waves reflected at the interfaces A-B and B-C produce constructive interference for certain wavelengths ($\lambda_c$), as given by the general formula:

$$\lambda_c = \left( \frac{4t_B}{2m + p/\pi} \right)\left( \frac{n_B}{n_A} \right), m \in \mathbb{N} \qquad\qquad \text{Eq. S1}$$

where $t_B$ is the thickness of the layer travelled by the light between the two reflections, $n_A$ and $n_B$ are the refractive indices of media A and B, respectively, $p$ is the relative phase change of the two reflected waves, and m is an integer. The $p$ value is equal to $\pi$ if only one interface reflects light with a $\pi$ phase change (either $n_B > n_A$ or $n_C > n_B$). The $p$ value is equal to zero if none or the two interfaces reflect light with a $\pi$ phase change ($n_C > n_B > n_A$ or $n_C < n_B < n_A$).

The above relation was applied to predict the wavelengths at which constructive interference is expected in the particle system according to the invention. To this end, only the constructive interference between reflections at the two interfaces of the top titania layer ($R_0$ and $R_1$ in the upper view of figure 1b) and the two interfaces of the alumina layer ($R_1$ and $R_2$ in the upper view of figure 1b) were considered. Although other reflection combinations are possible, these two are assumed to be the most important within the visible range. It is noted that the pair of reflections $R_0$ and $R_1$ lead to the same critical wavelengths as the combination of reflections $R_2$ and $R_3$.

Taking $n_a$, $n_t$ and $n_0$ as the refractive indices of alumina, titania and epoxy, the general formulation above predicts the following critical wavelengths for the constructive interference between the reflections $R_0$ and $R_1$ ($\lambda_{c1}$), and $R_1$ and $R_2$ ($\lambda_{c2}$):

$$\lambda_{c1} = \left(\frac{4}{2m+1}\right)\left(\frac{n_t}{n_0}\right) t_t \qquad\qquad \text{Eq. S2}$$

$$\lambda_{c2} = \left(\frac{4}{2m+1}\right)\left(\frac{n_t}{n_a}\right) t_a \qquad\qquad \text{Eq. S3}$$

Since the titania coating on the alumina particles can be synthesized in different thicknesses, equations S2 and S3 were used to estimate the effect of the coating thickness $t_t$ on the critical wavelengths $\lambda_{c1}$ and $\lambda_{c2}$ for alumina particles of fixed thickness $t_a$ = 250nm (Figure S1B). Refractive indices $n_0$ = 1.5 , $n_a$ = 1.7 and $n_t$ = 2.6 were assumed in these calculations. Moreover, only m integers that lead to wavelengths within the visible range were considered.

The theoretical analysis shows that the reflections at the two titania-alumina interfaces ($R_1$ and $R_2$) result in a critical wavelength $\lambda_{c2}$ = 510 nm that is independent of the coating thickness ($t_t$). This explains the strong reflectance observed around this wavelength for all the composites containing titania-coated particles (diagrams in figure 2c and 2e). In contrast, the thickness of the titania coating strongly affects the critical wavelength ($\lambda_{c2}$) associated with the constructive interference of reflections from the titania interfaces ($R_0$ and $R_1$). Indeed, varying $t_t$ between 0 to 100 nm allows one to tune the critical wavelength ($\lambda_{c2}$) to specific values along the entire visible spectrum. The strong reflections achieved by constructive interference of these specific wavelengths are perceived as structural colors. The titania-coated particles used in this work rely on this fundamental mechanism to generate the turquoise and red colors observed macroscopically.

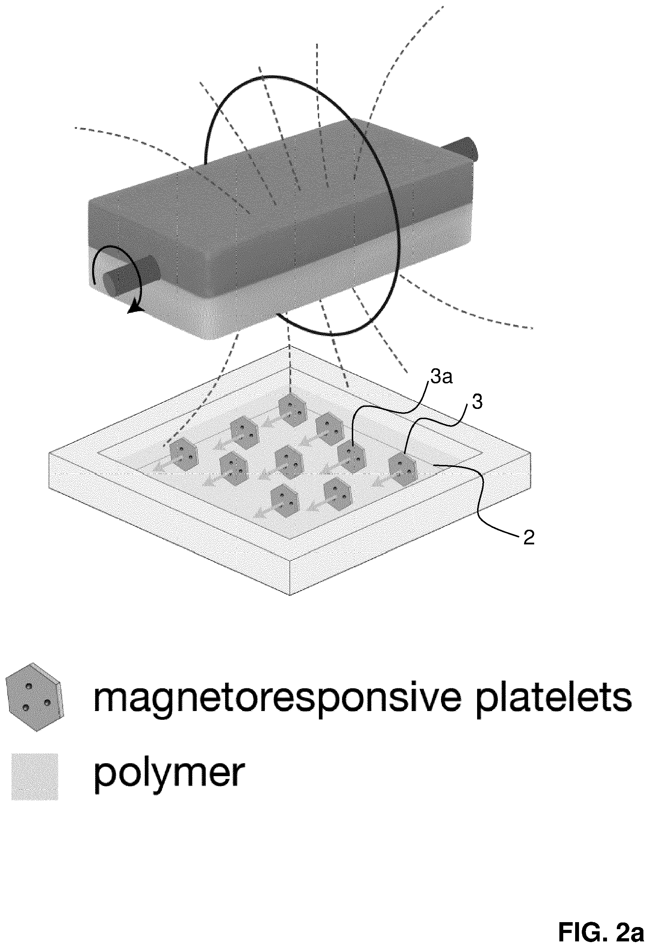

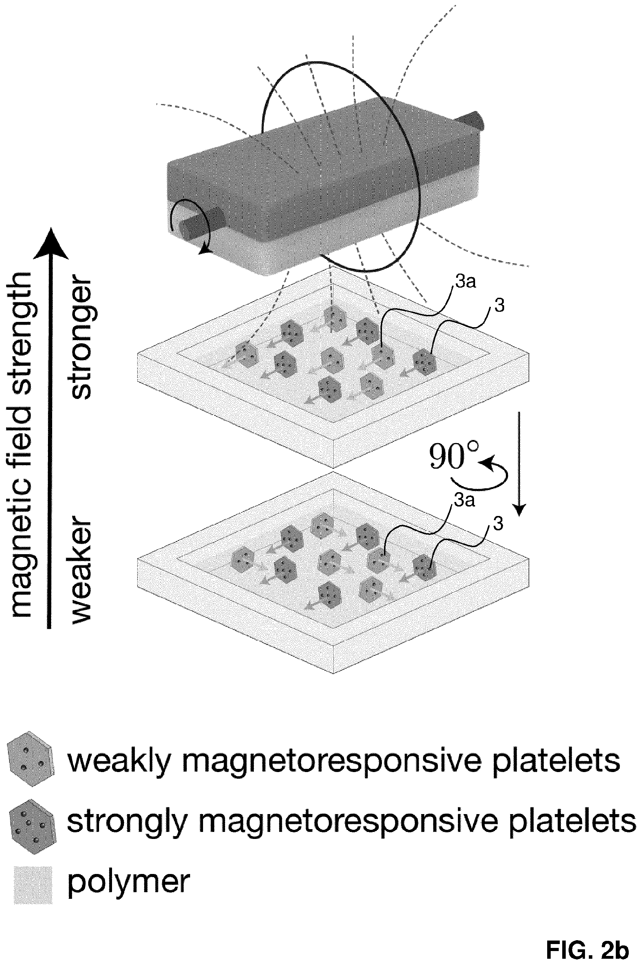

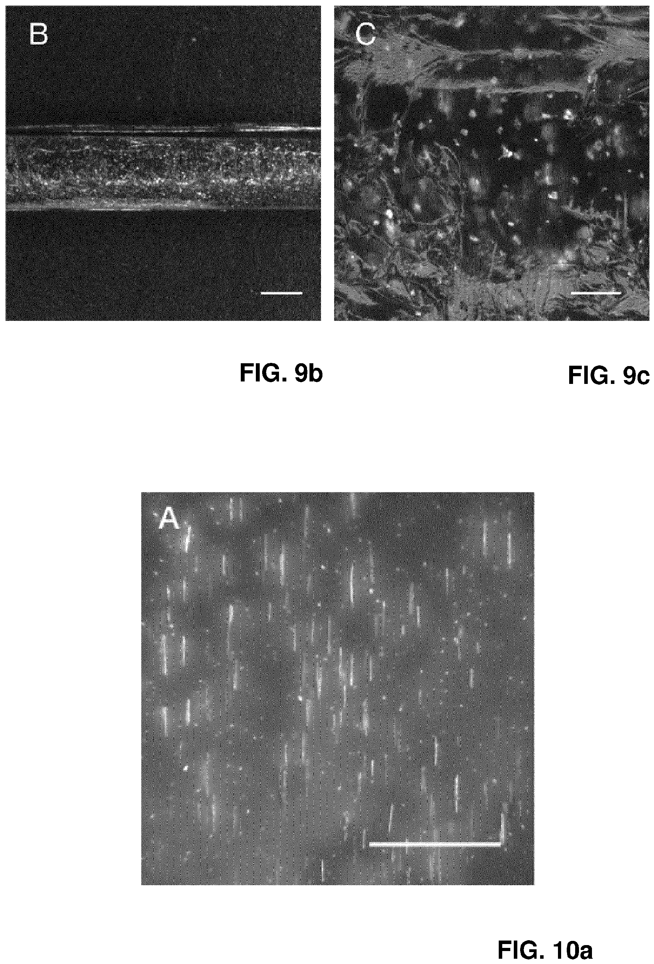

Composite materials 1 with controlled particle orientations are manufactured using a previously reported magnetically assisted assembly approach as it is depicted in figures 2a and 2b. Namely, with the help of a rotating permanent magnet, composite materials 1 with one (figure 2a) or more (figure 2b) particles 3, 3a, ... can be biaxially aligned within a liquid monomer mixture before fixation via polymerization so as to form the matrix 2 comprising the embedded and biaxially aligned particles 3, 3a, .... To this end, the particles 3, 3a, ... are first coated small quantities (0.001-0.005 vol.-%) of superparamagnetic iron oxide nanoparticles (SPIONs) to become magneto-responsive. As is depicted in figure 2a, a set of particles 3, 3a, ... designed for one structural color can be used alone or combined with other coated particles to create distinct colors depending on the strain direction being applied to the matrix 2 relative to the particle orientation. When only one specific color is desired, particles 3, 3a, ... of the selected type are suspended in a cross-linkable liquid phase and exposed to a rotating magnetic field in the order of tens of milliTeslas. This enables biaxial alignment of the suspended particles 3, 3a, ... in the desired orientation, which is eventually fixed through consolidation of the liquid phase, see also figures 10a to 10c. As depicted in figure 2b, for composite materials 1 with two colors, two set of particles 3, 3a, ... with distinct thicknesses of the titania coating 7 were used. To enable selective orientation, the magnetization level of each set of particles 3, 3a, ... was tuned by changing the SPION concentration on their surfaces 4, 4a, .... Multicolor composite materials 1 were then manufactured by first exposing a mold comprising a suspension that contains the two sets of particles 3, 3a, ... to a stronger magnetic field. This resulted in the biaxial alignment of all particles 3, 3a, ... in the direction imposed by the external magnetic field. In a subsequent step, the mold was rotated by 90° and the applied magnetic field was reduced to selectively re-align only the set of particles 3a featuring stronger magnetic response. To create highly stretchable composite materials 1 with single or dual color changes, silicones or hydrogels with high failure strain as the reactive cross-linkable liquid phase were used. This magnetic alignment technology can potentially also be implemented using 3D printing platforms.

The upper views of Figure 2c illustrate that silicone-based composite materials containing 1 wt.-% of turquoise particles show a remarkable color change from black to bright shades of blue when uniaxially stretched up to 300% under normal white light. In this particular example, a second layer of silicone filled with black pigment particles is attached to the back of the architectured composite material to provide a dark background. The observed mechano-optic effect occurs when the composite is stretched along the axis perpendicular to the plane of the biaxially oriented particles. Optical microscopy of the composite material before and after stretching at 300% reveals that the orientation of particles changes from vertical to horizontal under high strains, suggesting that the increase in brightness arises from the mechanically imposed tilting of the particles. Like micromirrors, the particles reflect an increasing portion of the incoming light due to the increase of the reflecting surface area as the composite material is stretched. Because high strains are required for particle tilting, it is crucial to select a highly stretchable elastomer as the composite material polymer matrix. Mechanical tensile tests indicate that the presence of particles does not compromise the stretchability of the composite material, which displays a hyperelastic stress-strain response typical of elastomers.

The observed mechano-optic effect was quantified by measuring the diffuse reflectance of the composite material within the visible spectrum at increasing stretch ratios, see lowest view of figure 2c. In fact, said diagram shows the wavelength-dependent diffuse reflectance of a soft composite material containing out-of-plane aligned particles as a function of the applied tensile strain. It becomes readily apparent that stretching of the composite material above 50% strain leads to a distinguishable peak in diffuse reflectance, which increases in height proportionally to the applied strain. Irrespective of the stretch ratio, the reflectance peaks are centered around the wavelength of 520 nm, which is characteristic of the turquoise color. Such wavelength lies within the range expected from a theoretical analysis of the constructive interference effect arising from the titania-coated particles used in these experiments. In this regard see the explanations provided at the end under the chapter "materials and methods". At a strain of 100%, the diffuse reflectance of the composite is as high as 60% despite the relatively low particle concentration of 1 wt.-%. This is in line with a previous theoretical analysis of the reflectance of particle-laden composite materials, which showed that the reflection by 20 to 40 particles through the thickness is sufficient to increase the diffuse reflectance of such composites above 40%.

The deformation-induced reflectance becomes orientation dependent if the composite architecture is designed to display two sets of orthogonally aligned colored particles. This directional mechano-optic response is illustrated using turquoise and red-colored particles aligned within orthogonal planes in the same composite material, see figure 2d. Photographs of composite materials stretched along different orientations indicate that the imposed strain predominantly activates the tilting of particles that are aligned perpendicular to the loading direction. To quantify this selective color change, the reflectance spectra of the composite material were measured when progressively stretched along the two relevant orthogonal orientations. The changes in turquoise and red colors of the composite material were assessed by analyzing the normalized reflectance under 100% strain for the arbitrary wavelengths of 540 and 670 nm, respectively. The results show that stretching the composite material along the turquoise-activating direction increases the normalized turquoise reflectance $(R_{540}^{100\%}/R_{540}^{0\%})$ by 136% as compared to a reflectance enhancement of only 37% for the red color $(R_{670}^{100\%}/R_{670}^{0\%})$. Likewise, the relative reflectance increase achieved by stretching the composite in the red-activating direction is 1.54 times higher for the red $(R_{670}^{100\%}/R_{670}^{0\%}=1.99)$ as compared to the turquoise color $(R_{540}^{100\%}/R_{540}^{0\%}=1.29)$.

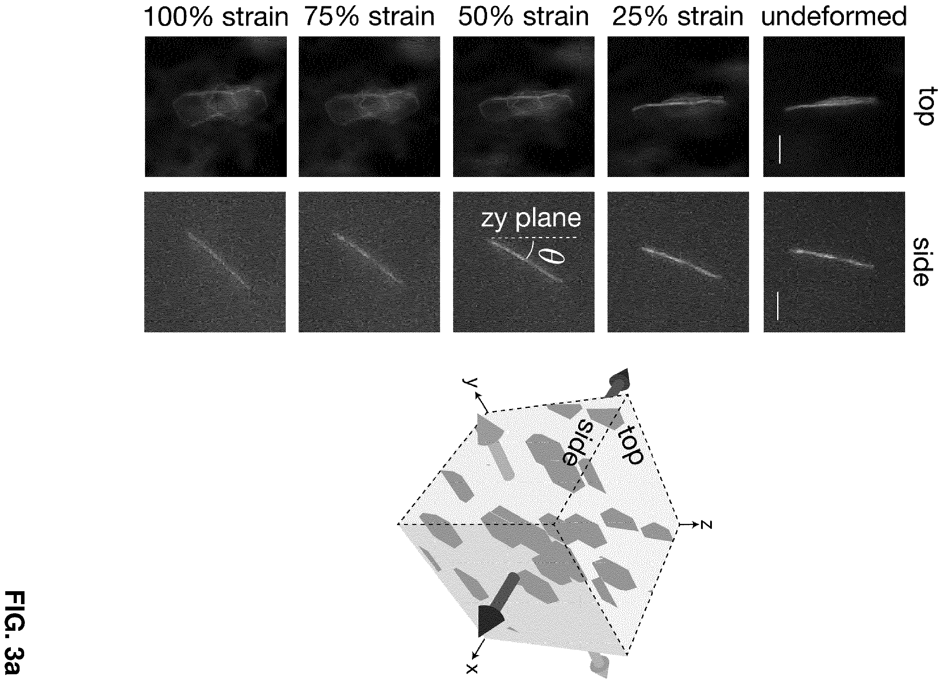

To better understand the relation between the applied strain and the change in reflectance, the rotation of individual particles during stretching of the composite material were experimentally measured, see figures 3a to 3d. This allowed a further testing of the hypothesis that macroscopic changes in reflectance originate from the strain-induced microscopic variations in the orientation of particles within the composite material.

In this experiment, an individual particle oriented orthogonal to the composite material surface was imaged from different perspectives while the composite material was globally strained along a specific direction, see figure 3A. The results confirm a clear rotation of an individual particle if the composite material is progressively stretched in the direction perpendicular to the surface of the particle. With the help of image analysis, this experiment showed that the angle of the individual particle increases monotonically with the magnitude of the globally applied strain, providing additional evidence of the mechanisms controlling the color change in the composite, see figure 3C.

The experimentally observed correlation between particle rotation and the applied global strain was further investigated to establish quantitative tools for the design of composite materials with tunable architectured color. To this end, a simple geometrical interpretation for the strain-induced particle rotation is proposed and compared with finite element simulations of a representative volume of the particle-laden composite material. Considering first a purely geometrical approach, the rotation of a particle upon stretching of the surrounding polymer matrix can be interpreted in terms of the Poisson effect. For an incompressible isotropic material, the Poison ratio is $v = 0.5$ and a tensile strain $\varepsilon_x$ applied along the $x$ direction results in a compressive strain of magnitude $\varepsilon_y = -v\varepsilon_x = -0.5\varepsilon_x$ in the orthogonal ($y$) direction. The expected shrinkage of the polymer matrix along the thickness of the composite material should eventually lead to the rotation of the embedded particle. Using this simple argument, one can derive the following relation correlating the angle ($\theta$) of the embedded particle and the strain applied to the polymer matrix along the axis normal to the surface of the particle $(\varepsilon_x)$: $\theta = \cos^{-1}\frac{\cos\theta_0}{\sqrt{1+\varepsilon_x}}$, where $\theta_0$ is the initial angle of the particle. By comparing the predictions of this geometrical model with the experimental data, it was found that the theoretical analysis slightly overestimates the absolute $\theta$ values but captures reasonably well the dependence of the particle angle on the applied global strain.

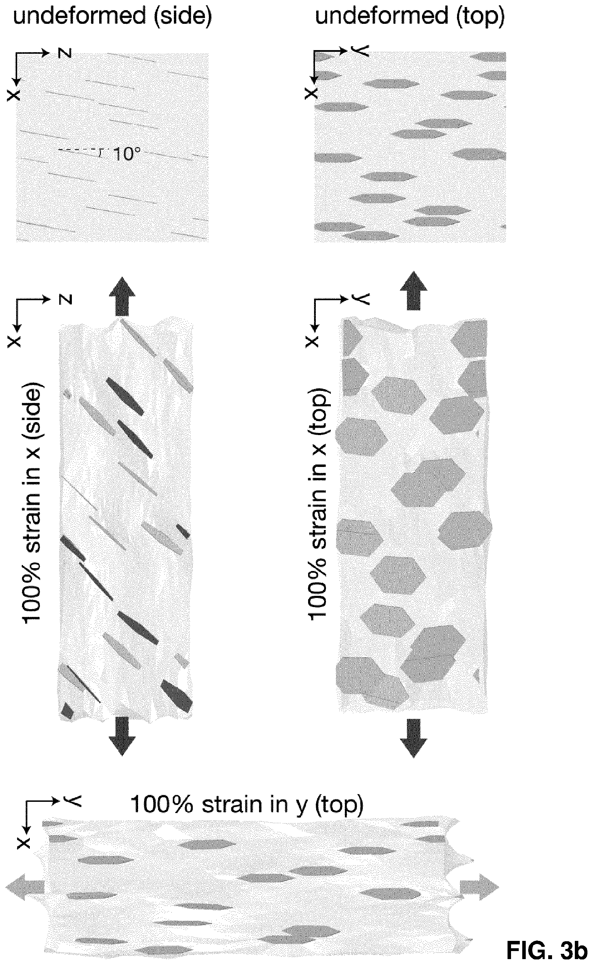

A more detailed analysis of the particle angle as a function of the imposed strain can be obtained by performing finite element simulations of the particle-laden composite material, see figure 3B. To enable a direct comparison with the experimental observations, a composite material containing particles aligned out-of-plane was first strained along the direction that was mechanically loaded in the experiment ($x$ axis). Top and side views of the particle at an applied strain of 100% show a good qualitative agreement between the simulations and the experimental microscopy images, see figures 3a and 3B. With the help of these simulations, the response of the particles when the global strain is applied parallel to the alignment plane (*y* axis) was also studied. The simulations indicate that this loading configuration does not lead to any significant rotation of the particles, which explains the anisotropic nature of the strain-induced color change, see also figure 2d and 4a. A quantitative comparison between simulations and experiments for composite material loaded along the color-changing direction reveals that the finite element analysis correctly captures the experimentally observed trend between the particle angle and the applied strains.

By quantifying the effect of the imposed strain on the rotation of an individual particle, the inventors were able to predict the macroscopic change in reflectance resulting from the collective rotation of particles upon stretching of the composite material. For the idealized scenario of perfectly aligned particles, one should expect the reflectance to sharply rise when the angle of the particles is at 90° to the viewing angle of an observer. Because manufacturing limitations do not allow for perfect alignment of all particles, the reflectance of the composite material exhibits in fact an angular dependence that results directly from the angular distribution of the embedded reflecting particles. To demonstrate this correlation, we experimentally measured the reflectance at a fixed observation angle of 45° for a composite material with particles initially aligned at an average angle of 10° and subjected to stretching, see figure 3D. In this experiment, light is also emitted at an angle of 45° with respect to the surface of the composite material. The results show that the reflectance increases significantly for strains higher than 75%, reaching the highest level at an applied deformation of 100%. On the basis of the present experiments on individual particles, strain levels between 75 and 100% lead to particle angles in the range 37-41°, see figure 3C, which translates into angles of 82-86° relative to the reflectance probe. Such analysis confirms that the composite material reflectance increases strongly as the majority of particle approach an angle of 90° relative to the observer. These findings imply that the breadth of the reflectance curve is directly related to the standard deviation of the particle angular distribution in the polymer, see figure 3d. Indeed, estimates of the particle angular distribution from the breadth of the measured reflectance curve leads to a standard deviation of 6°, which is within the range expected for particles aligned with the magnetic alignment technology used in this work and described with reference to figures 2a and 2b above.

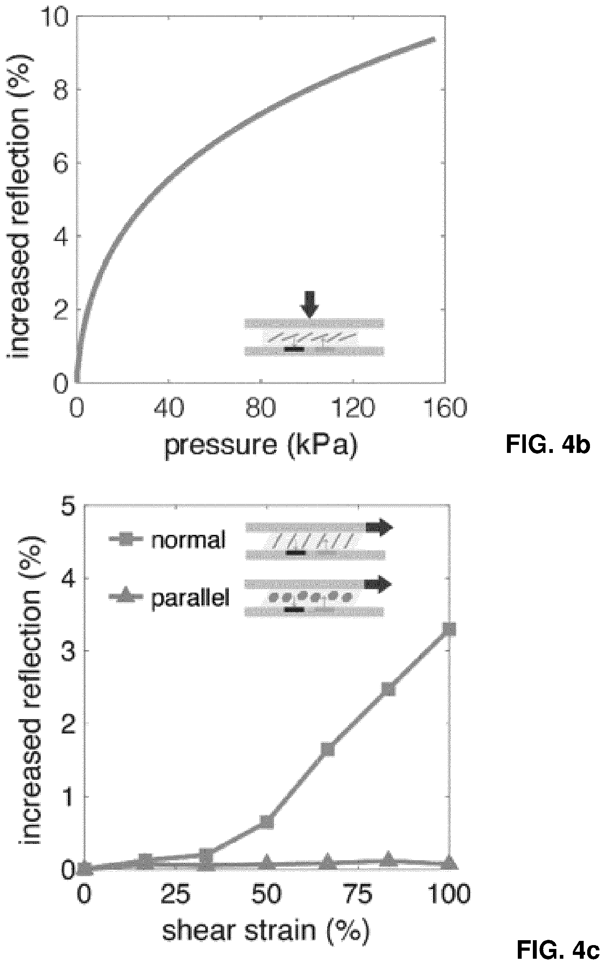

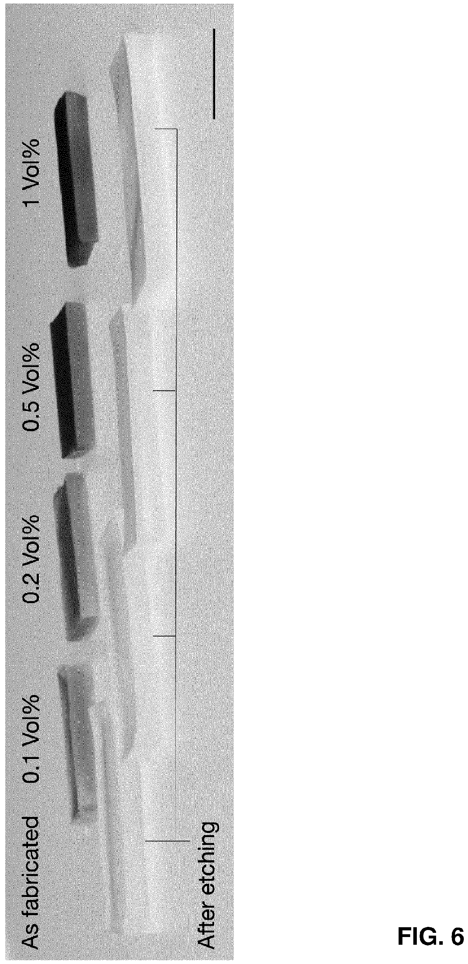

Composites with strain-activated architectured colors can potentially be used as smart stretchable displays, color-changing soft actuators or as passive mechanical sensors with simple optical readout. To illustrate these possible applications, the inventors manufactured and evaluated the functional performance of demonstrators featuring distinct color architectures made with different types of particles and polymer matrices, see 4a to 4c. Because color is generated under standard white illumination, the unique attractive feature of such demonstrators is the fact that no external power is needed to induce color changes except for the mechanical energy required to control the orientation of the embedded particles by stretching. Soft conformable displays that selectively change color depending on the stretching direction were prepared by magnetically aligning coated particles in a silicone-based composite with programmed multiscale architecture, see left and right views of the middle panel of figure 4a. The architecture is designed at the centimeter scale to exhibit different colored patterns upon mechanical actuation in specific directions. The direction leading to color changes is programmed at the micrometer scale by aligning particles in particular orientations in the silicone matrix. At the nanoscale, the thickness of the titania coating can be tuned to change the macroscopic structural color arising from the microscopic reflective particle. The implementation of such a multiscale architecture in more complex macroscopic geometries enables the fabrication of air-driven soft actuators that change color when inflated, see the right view of the lower panel in figure 4a. In contrast to the power-hungry camouflaging strategies reported in the literature, these soft robotic parts can simultaneously morph and change color using just pressure as the single input. The concept of architectured color implemented in such demonstrators can also be extended to composites with other polymer matrices. This was illustrated by manufacturing composite materials with orientation-selective color changes using double-network hydrogels as the continuous polymer phase, see left and right views of the upper panel and the left view of the lower panel of figure 4a. In this case, the hydrophilic nature of the polymer allows for the removal of the SPIONs by a simple chemical etching procedure at the end of the fabrication process, see also figure 6. This leads to highly transparent composites that generate impressive vivid colors only when mechanically sheared, see left view of upper panel and left view of lower panel in figure 4a. The conversion of mechanical stimulus into color changes can be harnessed to create soft conformal patches that optically sense the topography of rigid surfaces. Using stereolithography 3D printing to create a complex three-dimensional rigid surface, it was showed that the topography of the rigid object can be sensed through local color variations in the patch when put in contact with the rigid surface and sheared, see right view of the upper panel in figure 4a. Such a functionality may find use in synthetic skins that could provide robots with proprioceptive skills to sense, self-orient and interact with unstructured environments. To evaluate the sensing capabilities of such a light-based tactile skin, one of the composite material patches according to the invention were placed on top of a set of light-emitting and photosensitive diodes and measured the change in reflectance of the material when subjected to controlled mechanical stimuli, see figures 4b and 4c. The experiments revealed that the silicone-based composite material can sense normal pressures up to 160 kPa through a relative increase in reflectance between 0 and 10%, see figure 4b. Importantly, the orientation-dependent color changes programmed within the composite architecture allowed the skin to sense the direction of the imposed mechanical stimulus, a feat that is not easily achieved using state-of-the-art synthetic skins. This is illustrated by measuring the relative increase in reflectance of the composite when subjected to shear stresses in different directions, see figure 4c. A clear increase in reflectance is detected if the composite material is sheared along the normal direction of the underlying particles, whereas no reflectance change is observed upon shearing parallel to the plane of oriented particles.

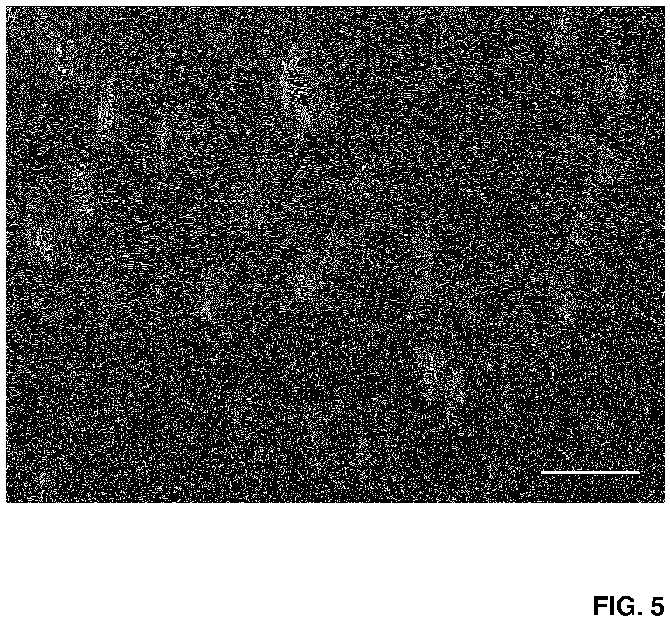

With respect to figures 5 to 10c further aspects of composite materials according to the invention shall be illustrated.

Namely, figure 5 depicts a light microscopy image of 2D aligned particles in a silicone-based soft composite material, wherein the scale bar is 50 $\mu$m.

Figure 6 illustrates a removal of SPIONs from the hydrogel composite materials using chemical etching. The left views depict hydrogel samples with different volume concentrations of aligned red particles before and after etching in a 50 wt.-% phosphoric acid solution. The right views depict cross sections of hydrogel samples after etching, illustrating the removal of the brownish color of SPIONs that is present in the hydrogel samples depicted in the left views. The scale bar is 2 cm.

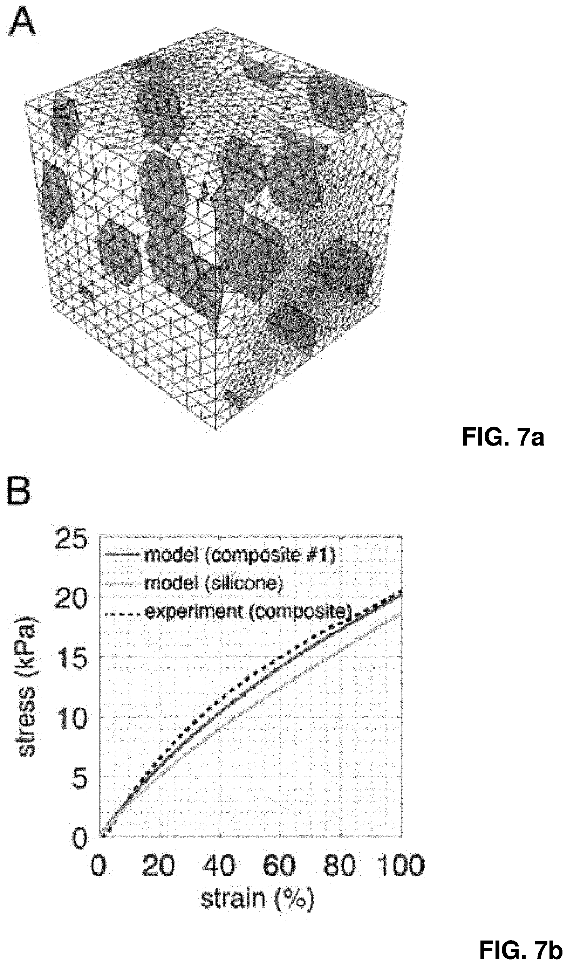

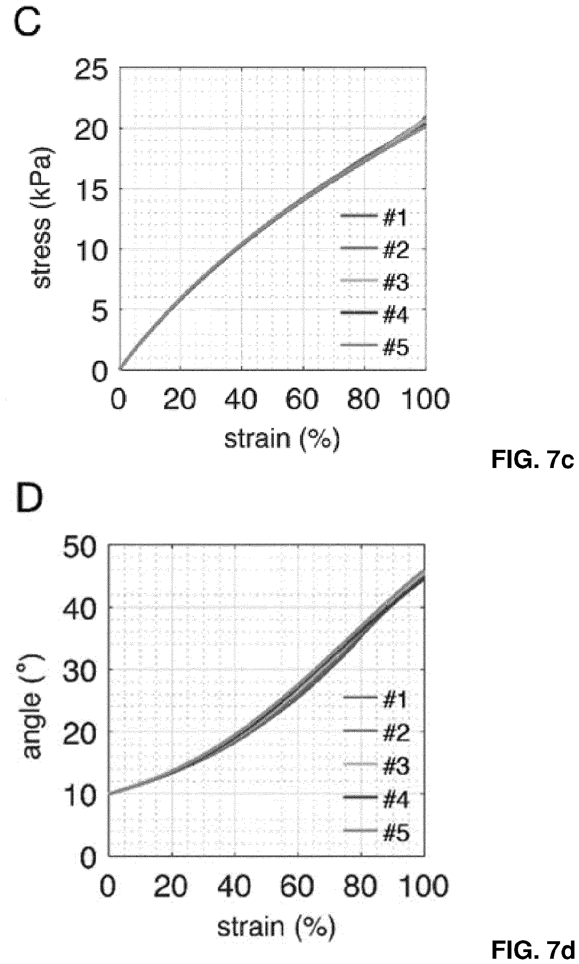

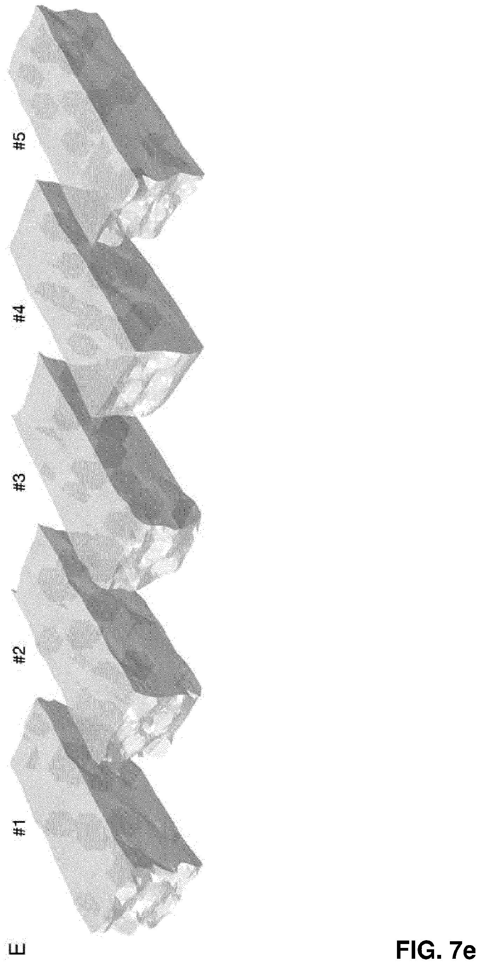

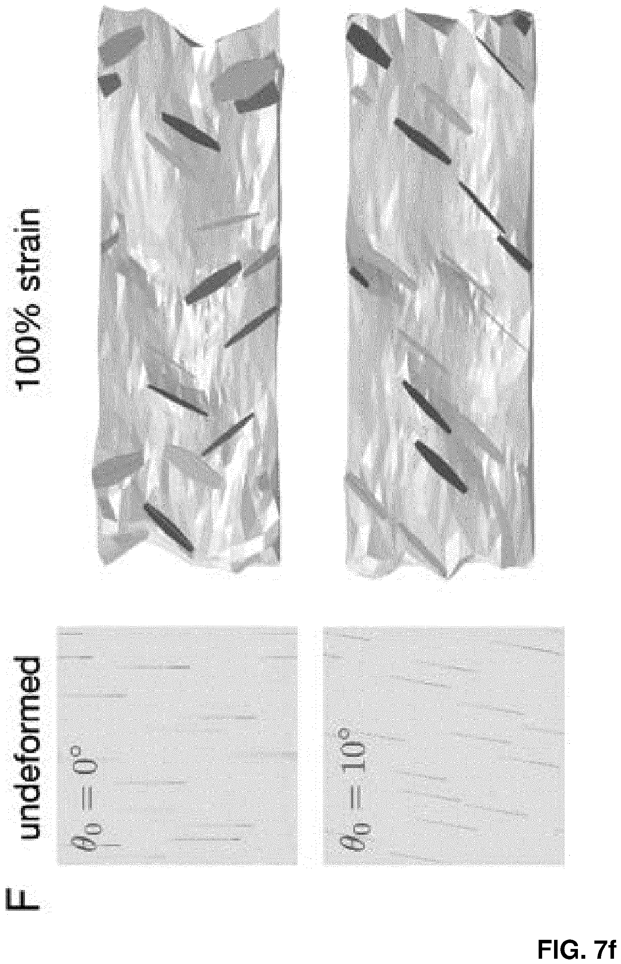

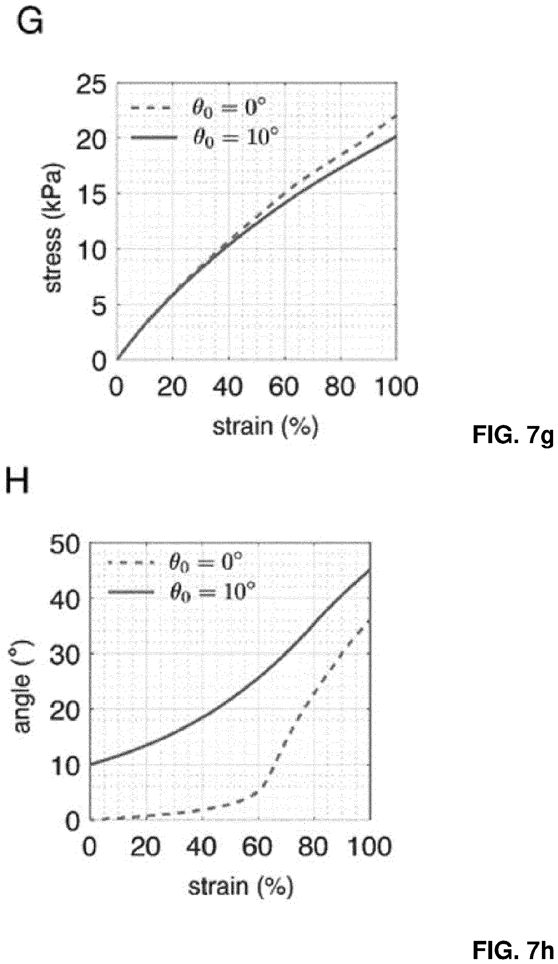

Figures 7a - 7h depict finite element simulation of particle-laden soft composites. In particular, figure 7a depicts an example of a mesh used in the FE simulations. Figure 7b depicts stress-strain curves of a silicone-based composite material obtained from the experiment compared to the simulations. Figure 7c depicts the simulated mechanical behaviour, figure 7d depicts the mean orientation of all particles, and figure 7e depicts the deformed configuration of 5 different samples with distinct random placement of particles at 100% strain. Figure 7f depicts a simulated configuration of particles before and after the application of a tensile strain of 100% in a composite material containing particles with distinct initial angles, $\theta_0$. Figure 7g depicts simulated stress and figure 7h depicts the particle angle as a function of the applied strain for composite materials with different initial particle angles. Note that the reported angles in figure 7h for $\theta_0 = 0°$ are the mean of absolute values.

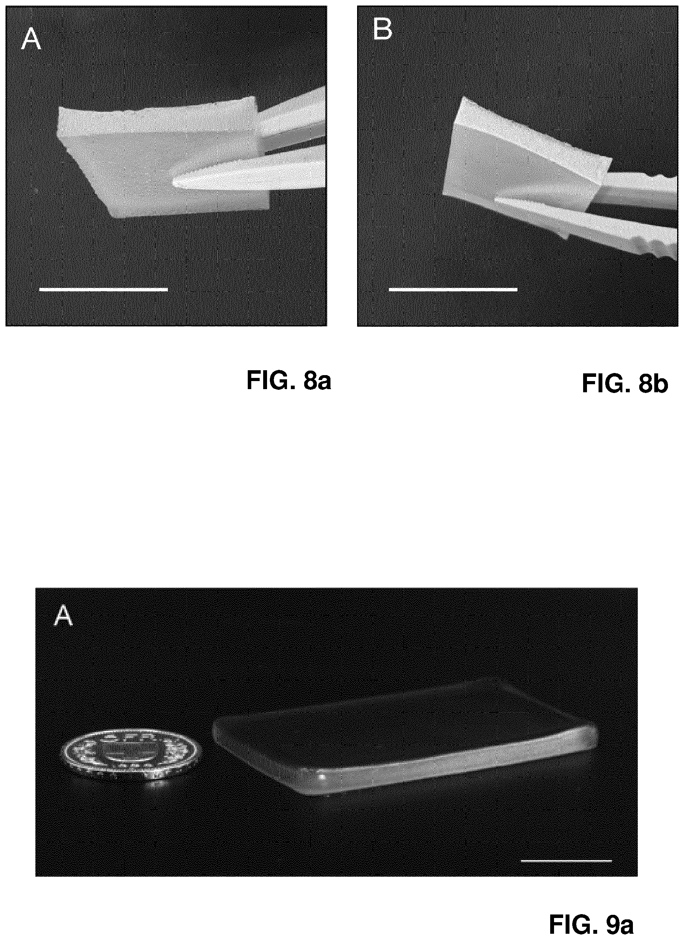

Figures 8a to 8b depict UV-cured hydrogel composite material samples, wherein figure 8a depicts the pure hydrogel and figure 8b depicts a hydrogel composite material filled with aligned turquoise particles. The scale bars is 2 cm.

Figures 9a to 9c depict hydrogel composite material samples with aligned reflective particles. In particular, figure 9a illustrates that large composite material samples can be manufactured using the proposed magnetic assembly technique explained with reference to figures 2a and 2b above. Figures 9b and 9c depict cross sections of a hydrogel composite material sample with 0.016 vol.-% aligned red particles. The scale bars in these figures is 2 cm (figure 9a), 1 mm (figure 9b), 200 $\mu$m (figure 9c).

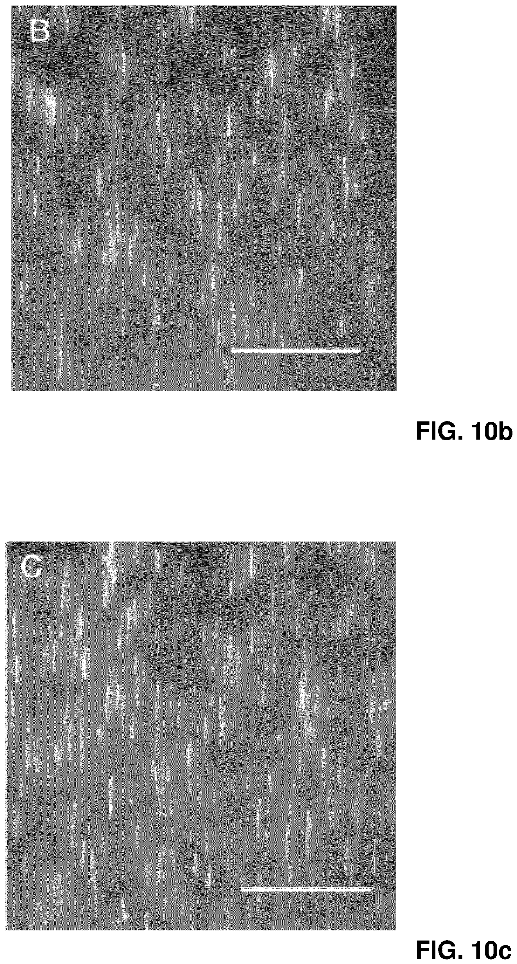

Figures 10a to 10c depict light microscopy images over 100 $\mu$m through the thickness of silicone-based soft composites filled with 0.034 vol.-% (figure 10a), 0.068 vol.-% (figure 10b), and 0.1 vol.-% (figure 10c) particles aligned out of plane. The scale bar is 100 $\mu$m.

For further information on the materials and methods used in the preparation and characterization of the composite materials according to the invention reference is made to the explanations provided at the end under the chapter "materials and methods".

Hence, in summary it can be said that soft composite materials with a multiscale architecture of aligned particles can be designed to undergo dramatic color changes when stretched along the direction normal to the alignment plane. The color change arises from the collective tilting of embedded particles, which work as micromirrors to enable specular reflection of the incoming light. Because the particles are coated with a layer of high-refractive index oxide, the reflected light produces structural color under standard illumination conditions without requiring additional energy sources. The level of particle tilting, and the associated color change induced by stretching can be explained in terms of a simple Poisson effect and is also well captured by finite element simulations. The particle architecture within the soft composite material can be programmed to create a broad range of stretchable and conformal devices that generate color when mechanically loaded or uses structural color to sense mechanical stimuli imposed by the environment. The proposed concept of strain-induced architectured color may find applications in soft robotic actuators, low-power stretchable displays, smart synthetic skins, conformable reflective devices, etc.

MATERIALS AND METHODS

Silicone-based soft composite materials

Soft composite materials that change color when strained in one direction were manufactured using titania-coated alumina particles (Xirallic® T60-25 SW Cosmic Turquoise, Merck KGaA), superparamagnetic iron oxide nanoparticles (SPIONs, ferrofluid EMG 605, Ferrotec GmbH) and a silicone-based elastomer (Ecoflex™ 00-20, parts A and B, Smooth-On, Inc.). The particles were magnetically functionalized by the adsorption of SPIONs from the ferrofluid following a previously reported protocol (R. M. Erb, R. Libanori, N. Rothfuchs, A. R. Studart, Composites Reinforced in Three Dimensions by Using Low Magnetic Fields. Science 335, 199-204 (2012)). In a typical procedure, 200 g of particles are first added to 4 L of deionized water to form a particle suspension. In another flask, 7 ml of the ferrofluid is added to 1L of deionized water to obtain a diluted suspension of SPIONs. The particles and SPIONs suspensions are stirred separately and later mixed with one another. The SPION-coated particles obtained after mixing are eventually removed by filtration after a stirring time of 24 hours. The resulting magnetized particles were then added to the part A of the elastomer to form a suspension containing either 0.25 or 2 wt.-% particles, depending on the concentration desired in the final composite material. The suspension was mixed in a planetary mixer (ARE-250, THINKY), added to the part B of the elastomer and mixed again before pouring into a mold. The weight ratio between parts A and B of the silicone resin was fixed at 1:1. The resin-filled mold was left for 2h next to a neodymium magnet (Death Magnet, Supermagnete) rotating at 500 rpm or about 10 Hz by an electric motor. The rotating magnet was arranged to induce the alignment of the magnetized particles within the plane of the rotation. Upon curing of the resin, the particles in the suspension were fixed with the in-plane alignment imposed by the magnetic field. Composite material samples were prepared with final particle concentrations of 0.125 wt.-% (0.034 vol.-%) and 1 wt.-% (0.272 vol.-%).

Soft composite materials were also manufactured to display distinct color changes upon stretching in two perpendicular directions. To this end, two sets of particles with titania coating of different thicknesses were used. These particles were functionalized with different SPION concentrations in order to tune their magnetic response and thus align them in distinct orientations, following the sequential alignment protocol previously reported in the literature (R. M. Erb, J. S. Sander, R. Grisch, A. R. Studart, Self-shaping composites with programmable bioinspired microstructures. Nat Commun 4, 1712 (2013)). Red particles (Xirallic® T60-21 SW Solaris Red, Merck KGaA) were magnetically functionalized with five times more SPIONs than turquoise particles (Xirallic® T60-25 SW Cosmic Turquoise, Merck KGaA), which gives the two sets different responses to the imposed magnetic fields. The red and turquoise particles were mixed with the elastomer resin to generate a suspension that was poured into a mold. By leaving the mold close to the rotating magnet for 15 minutes, both types of particles were first aligned parallel to the rotating field. Subsequently, the mold was moved 5 cm further from the magnet and rotated by 90°, allowing only the more responsive red particles to re-align perpendicular to the previously oriented turquoise particles. The mold was left in this position for 2h for complete curing.

A step-wise curing sequence was used to create stretchable soft composite materials combining specific patterns and directional color-changing effects, see figure 4a. In this case, distinct color changes are programmed within different regions of the composites, so that specific patterns are unveiled upon stretching of the sample. This was accomplished by using two sets of particles in the same composite material and aligning them in different directions depending on the position within the sample. To generate a pattern, the suspension of particles was first cast into a 3D-printed mold with the negative shape of the desired pattern, namely the logo "ETH" or "SDU". A rotating magnetic field was used to align the particles in a specific direction while the suspension was cured for 2h. The resulting composite material with the shape of the pattern was removed from the first mold and placed in a rectangular-shaped mold. In the second step, the rectangular mold containing the first cured sample was filled with a second suspension containing either the same particles (ETH logo) or particles with a different color (SDU logo). The final stretchable displays were generated by imposing a rotating magnetic field to align the particles orthogonal to the first set of particles, followed by curing of the second suspension.

Hydrogel-based soft composites

Double-network hydrogels and magnetically functionalized particles were used to fabricate transparent soft composite materials with architectured color. Hydrogels were manufactured using an experimental protocol adapted from a previously reported study (J.-Y. Sun et al., Highly stretchable and tough hydrogels. Nature 489, 133-136 (2012)). In a typical sample, a suspension with the following constituents and mass fractions was prepared: 91.81 wt.-% distilled water, 1.08 wt.-% alginate (A2033, Sigma Aldrich), 0.06 wt.-% MBAA (N,N'-methylene bisacrylamide, 146072, Sigma Aldrich), 0.25 wt.-% TPO (diphenyl(2,4,6-trimethylbenzoyl)phosphine oxide, 415952, Sigma Aldrich), 5.80 wt.-% acrylamide (A8887, Sigma Aldrich) and 1 wt.-% turquoise or red particles. Composite materials were prepared by first mixing the suspension in a planetary mixer and pouring it into a mold. To align the particles while polymerizing the acrylamide, the mold was placed inside a box connected to nitrogen supply and equipped with an ultraviolet light source (wavelength 300-450 nm) adapted to TPO, which cures at wavelengths below 405 nm. The box was moved close to a rotating magnet and the suspension was left 10 min directly exposed to ultraviolet light under nitrogen atmosphere. The polymerized acrylamide gel was removed from the mold and left for 1h in an aqueous solution of 5 wt% $CaSO_4$ (calcium sulphate, C3771, Sigma Aldrich) to cross-link the alginate molecules that form the second gel. While the presence of SPIONs makes the soft composite materials initially opaque, the hydrophilic nature of the cured hydrogels enables removal of the SPIONs from the gelled composite materials following a previously reported chemical etching procedure (R. M. Erb, R. Libanori, N. Rothfuchs, A. R. Studart, Composites Reinforced in Three Dimensions by Using Low Magnetic Fields. Science 335, 199-204 (2012)). To achieve transparency, the opaque double-network hydrogel was transferred to a solution of 50 wt.-% phosphoric acid (345245, Sigma Aldrich) in distilled water for approximately 2h. The final composite material was rinsed with distilled water and stored in the $CaSO_4$ solution.

Air-driven soft robotic actuators

Soft actuators that change color upon inflation were fabricated via sequential casting of three distinct silicone resins into a 3D printed mold. The 3D printed mold was designed to generate a bending actuator with interconnected cavities (Pneunets) that can be inflated with air pressure (J. Jorgensen, Parametric Tool to Generate 3D Printable PneuNet Bending Actuator Molds, available at https://softroboticstoolkit.com/parametric-tool-3d-printed-molds. (2018)). To simultaneously bend and change color upon inflation, the actuator features a stiffer silicone on one side and a softer silicone with architectured color on the other side. This complex 3D structure was manufactured by first depositing an uncured layer of the stiffer elastomer resin (Renew™ Silicone 20, Smooth-On, Inc.) at the bottom of the mold. Next, a silicone resin (Ecoflex™ 00-20, parts A and B, Smooth-On, Inc.) mixed with black dye pigment (Silc Pig™, Smooth-On, Inc.) was also deposited uncured until the mold was completely filled. Curing of these two resins for 2h led to strong attachment between the resulting silicones. In a second step, a third silicone resin containing turquoise particles was deposited directly on top of the black outer surface of the actuator to generate the layer with architectured color. The processing route used to fabricate this third layer is similar to the one employed for the preparation of silicone-based soft composites described above. The black pigment present in the silicone beneath the third layer ensures a high color contrast in the inflated state of the actuator.

Characterization

The mechanical properties and the deformation-induced color change of the soft composite materials were quantified under tensile mode using a mechanical universal tester (Shimadzu AGS-X) operated at a displacement rate of 2 mm/min. The tested soft composite materials were 2 mm thick and 30 mm long. Soft composite materials were imaged during the mechanical tests using a digital camera (Sony RX100 VI). The reflectance of the composite material as a function of applied tensile strain (figure 2d) was measured with a specular reflectance probe and a spectrometer for visible light (Ocean Optics Inc.). For composite materials manufactured with orthogonally aligned turquoise and red particles, the reflectance was measured upon stretching along one of the two color-changing perpendicular directions.

The rotation of individual particles during stretching of the soft composite material (figure 3A) was investigated in a digital optical microscope (Keyence VHX). To track the rotation of single particles as a function of the applied strain, a high-magnification lens (Keyence VH-Z500R) was coupled to the optical microscope. The particles were imaged from their top and side views while the composite materials were stretched by an Arduino-controlled stepper motor (M-23 1.8° 3.0 A, NEMA 23) with 0.25 mm steps.

The reflectance of stretched composite materials at a fixed observation angle (figure 3D) was measured with a probe for specular reflectance analysis. The reflectance probe was tilted by 45° with respect to the surface of the composite material and was pointed to a spot between the center of the composite material and the clamps used to fixing it to the stepper motor. This probe tilting angle was chosen so that the particles were aligned perpendicular to the probe at high strains, thus maximizing the macroscopic reflectance.

The ability of the proposed soft composite materials to sense mechanical stimuli through optical signals was demonstrated using a photodiode and LEDs (MAX86141, Maxim Integrated) emitting at wavelength 536 nm placed underneath a silicone-based sample (Figure 4H,I). The 2 mm-thick soft composite material used in these experiments contained 4 wt.-% turquoise particles vertically aligned in the elastomer matrix. Experiments were performed by compressing or shearing the composite material while a dedicated software (MAX86140EVSYS, Maxim Integrated) recorded the intensity of light generated by the LEDs and reflected by the embedded particles. The optical signal was acquired with an integration time of 14.8 $\mu$s with the LEDs operating in continuous mode. For compressing the soft composite materials, a patterned surface was mounted on a mechanical universal tester. The pattern consisted of 2 mm-tall cylinders spaced from one another by 6 mm. The pressure was applied at a speed of 2 mm/min with a maximum force of 70 N. To apply shear forces, the upper surface of the composite material was fixed to a graduated focusing rail slider (MR 180, Fittest), while a constant compressive pressure of 1 N was applied normal to the surface of the composite material. Shear was imposed parallel to the surface of the composite material by moving the rail of the slider at a constant speed. The directional mechano-optical response of the composite material was probed by performing the same shear experiment after rotating the composite material by 90°.

Simulations

The simulations were carried out using the commercial finite element package ABAQUS 2017 with the Abaqus/Standard solver. A python script was developed for pre- and post-processing of the models and a user-material subroutine (UMAT) was employed to assign an incompressible Gent hyperelastic constitutive law to the silicone elastomer with a shear modulus of G=10kPa and a stretch limit of J=32. The alumina particles are much stiffer than the matrix, with a Young's modulus of 5.3 GPa (E. Feilden et al., Micromechanical strength of individual Al2O3 particles. Scripta Mater. 131, 55-58 (2017)) and a Poisson's ratio of 0.25. A cubic representative volume element (RVE) with an edge size of 100 $\mu$m was considered for the soft composite material. The RVE consists of an elastomer matrix that is populated with 16 hexagonal-shaped particles with a circumcircle radius of 15 $\mu$m and a thickness of 300 nm which results in a weight ratio of -1%. The particles are randomly dispersed in the RVE and are initially aligned at $\theta_0$ = 10°. Periodic boundary conditions are imposed on opposite edges and the unit cell are stretched in different directions under quasistatic conditions under a displacement-control protocol using a static step and considering the geometric nonlinearities. The effective stress-strain response of the composite material and the orientation of the particles are extracted in the post-processing step (Figures 7a to 7h).

Tensile mechanical properties of particle-containing silicone

To produce composite materials with strain-induced architectured color it is important that the presence of reflective particles does not degrade the high stretchability of the host elastomer. This critical aspect was evaluated by performing tensile tests on silicone samples with and without alumina particles. The experimental results show that the stretchability of the silicone elastomer is not significantly changed upon the addition of the low amounts of particles required to generate architectured color. Indeed, the stress-strain curve of soft composites with 0.125 wt.-% (0.034 vol.-%) and 1 wt.-% (0.272 vol.-%) particles displays an hyperelastic response that is similar to that of the pure silicone.

Spatial characterization of the magnetic field strength of the rotating magnet

A Hall probe was used to measure the spatial variation of the field strength of rotating magnet. The results provide a guideline for choosing a suitable distance for aligning multiple particles in stronger and weaker magnetic fields.

Removal of SPIONs using chemical etching

While the presence of SPIONs makes the soft composite materials initially opaque, the hydrophilic nature of the cured hydrogels enables removal of the SPIONs from the gelled composites following a previously reported chemical etching procedure (R. M. Erb, R. Libanori, N. Rothfuchs, A. R. Studart, Composites Reinforced in Three Dimensions by Using Low Magnetic Fields. Science 335, 199-204 (2012)).

To achieve transparency, the opaque double-network hydrogel was transferred to a solution of 50 wt.-% phosphoric acid (345245, Sigma Aldrich) in distilled water for approximately 2h. The final composite material was rinsed with distilled water and stored in the $CaSO_4$ solution. Comparison of hydrogel composite material samples containing different concentrations of aligned particles before and right after the removal of SPIONs demonstrate that this is an effective procedure to create magnetically assembled transparent composites (see figure 6).

Simplified geometric model for the rotation of particles

The strain-induced rotation of particles in a soft matrix was described using a simplified geometric model. Given the low volume fraction of the particles in the soft composite material, the composite material is assumed to behave like an incompressible isotropic material. A representative volume element (RVE) in which the particles are aligned with an initial angle $\theta_0$ with respect to the yz-plane are considered. Stretching the composite material in the x direction with a stretch ratio of $\lambda_1$ results in the shrinkage of the RVE in lateral directions. The incompressibility condition $\lambda_1\lambda_2\lambda_3 = 1$ implies that $\lambda_2 = \lambda_3 = 1/\sqrt{\lambda_1}.$ Since the rotational symmetry around the z axis is initially broken, the expected shrinkage of the polymer matrix along the sample composite material thickness should eventually lead to the rotation of the embedded particle around the z axis. Using this simple argument, one can derive the following relation correlating the angle $\theta$ of the embedded particle and the strain applied to the polymer along the axis normal to the surface of the particle ($\varepsilon_x = \lambda_1 - 1$):

$$\cos\theta = \frac{\cos\theta_0}{\sqrt{1 + \varepsilon_x}} \qquad \text{Eq. S4}$$

Finite element simulations of soft composite materials

The strain-induced rotation of particles were simulated using a simplified finite element model. It was assumed that particles are monodispersed and are perfectly aligned with an initial angle $\theta_0$ with respect to the plane normal to the stretching direction (x). A parametric model was created to generate a representative volume element (RVE) consisting of a soft matrix filled with randomly placed particles. The geometry of the RVE is periodic and if part of a particle falls outside the RVE, it is added to the opposite side. To avoid finite size effects and reduce computational costs, periodic boundary conditions on opposite faces were imposed. An example of a mesh used in the finite element simulations is shown in Figure 7A. Given the complex geometry of the RVE, matching the coordinates of the nodes on the opposite faces to impose periodic boundary conditions is very challenging. To overcome this limitation, the node onto the face of an element on the opposite face was projected and its displacement from the displacement of the nodes located at the corner of that element's face was interpolated using linear shape functions. To ensure that the obtained results are not affected by the random spatial distribution of the particles, 5 configurations with different placement of particles were considered. Then, the effective stress and mean orientation of particle's normal vector as a function of applied strain were extracted. The agreement of the obtained results with experiments (figure 7b) confirm that the selected number of particles are representative and provide consistent results irrespective of the position of particles (Figures 7c, 7d). Because of the nonuniformity of the magnetic field lines arising from the magnet, the alignment of particles with an initial angle of $\theta_0 = 0°$ is very challenging. Simulations to investigate this ideal case were used and compared with the results of the sample composite matrix with $\theta_0 = 10°$. Interestingly, while the stress-strain response of two cases is similar (Figure 7g), the rotation of particles is significantly different (figures 7e, 7h). In the sample with $\theta_0 = 10°$, the initial inclination of particles guides all particles to rotate in the same direction. Instead, particles in the sample with $\theta_0 = 0°$ do not rotate until the applied strain reaches 50%. At this strain, symmetry is broken and particles rotate almost equally in positive and negative directions. This computational analysis demonstrates that composite materials with high strain-induced reflectance require the deliberate alignment of particles at an initial angle $\theta_0 \neq 0°$.

LIST OF REFERENCE SIGNS

| | | | |
|---|---|---|---|
| 1 | composite material | Pp | plane |
| 2 | matrix | Pc | plane |
| 3, 3a, ... | particle | $\Theta 1$ | angle |
| 4, 4a, ... | particle surface | $\Theta 2$ | angle |
| 5, 5a, ... | composite surface | do | direction of observation |
| 6 | interface | R0, R1, ... | reflections |
| 7 | coating | n0 | refractive index |
| 8 | flexible device | nt | refractive index |
| | | na | refractive index |
| EM | electromagnetic radiation | | |
| E | extension direction | | |
| F | force | | |

**Claims**

**1.** A composite material (1) comprising:

- a matrix (2); and
- at least one particle (3);

wherein the matrix (2) is deformable and is configured to adopt at least a first state of deformation and a second state of deformation being different from the first state of deformation upon an application of a force (F) to the composite material (1), and
wherein the particle (3) is in connection with the matrix (2),
**characterized in that** the composite material (1) exhibits at least a first characteristics when the matrix (2) is in its first state of deformation and **in that** the composite material (1) exhibits at least a second characteristics when the matrix (2) is in its second state of deformation, wherein the first characteristics differs from the second characteristics.

2. The composite material (1) according to claim 1, wherein the first characteristics and/or the second characteristics is an optical property and/or an electrical property and/or a mechanical property and/or a magnetic property, and

wherein the first characteristics preferably is a first value of an optical property and/or a first value of an electrical property and/or a first value of a mechanical property and/or a first value of a magnetic property, and/or wherein the second characteristics preferably is a second value of an optical property and/or a second value of an electrical property and/or a second value of a mechanical property and/or a second value of a magnetic property.

3. The composite material (1) according to any one of the preceding claims, wherein, when the matrix (2) is in its first state of deformation, the particle (3) is configured to at least partially reflect and/or absorb electromagnetic radiation (EM) being incident on the particle (3) and/or to at least partially emit electromagnetic radiation (EM) upon an incidence of electromagnetic radiation (EM) on the particle (3), and wherein the first characteristics preferably is based on said reflected electromagnetic radiation (EM) and/or absorbed electromagnetic radiation (EM) and/or emitted electromagnetic radiation (EM), and/or wherein, when the matrix (2) is in its second state of deformation, the particle (3) is configured to at least partially reflect and/or absorb electromagnetic radiation (EM) being incident on the particle (3) and/or to at least partially emit electromagnetic radiation (EM) upon an incidence of electromagnetic radiation (EM) on the particle (3), and wherein the second characteristics preferably is based on said reflected electromagnetic radiation (EM) and/or absorbed electromagnetic radiation (EM) and/or emitted electromagnetic radiation (EM).

4. The composite material (1) according to any one of the preceding claims, wherein the particle (3) is configured to adopt at least a first state of orientation when the matrix (2) is in its first state of deformation and to adopt at least a second state of orientation being different from the first state of orientation when the matrix (2) is in its second state of deformation, and wherein the composite material (1) preferably exhibits its first characteristics when the particle (3) is in its first state of orientation and/or wherein the composite material (1) preferably exhibits its second characteristics when the particle (3) is in its second state of orientation.

5. The composite material (1) according to any one of the preceding claims, wherein the particle (3) is configured and/or arranged within the matrix (2) such, that at least one surface (4) of the particle (3) at least partially faces at least one direction of the force (F) when said force (F) is applied to the composite material (1), and/or

wherein the particle (3) is arranged and/or configured within the matrix (2) such, that the first characteristics and/or the second characteristics of the composite material (1) depends on a direction along which the force (F) is applied to the composite material (1), and/or wherein the particle (3) is configured and/or arranged within the matrix (2) such, that the first characteristics and/or the second characteristics of the composite material (1) is based on an orientation of the particle (3) with respect to the composite material (1), in particular based an orientation of at least one surface (4) of the particle (3) with respect to at least one composite surface (5) of the composite material (1).

6. The composite material (1) according to any one of the preceding claims, wherein the composite material (1) comprises at least one composite surface (5),

wherein the particle (3) comprises at least one surface (4), wherein a plane (Pp) running through the surface (4) of the particle (3) is arranged at a first angle ($\Theta$1) with respect to the plane (Pc) running through the composite surface (5) when the matrix (2) is in its first state of deformation, and wherein the plane (Pp) running through the surface (4) of the particle (3) is arranged at a second angle ($\Theta$2) with respect to the plane (Pc) running through the composite surface (5) when the matrix (2) is in its second state of deformation, wherein the first angle ($\Theta$1) is preferably different from the second angle ($\Theta$2).

7. The composite material (1) according to any one of the preceding claims, wherein the particle (3) has an essentially two-dimensional shape and/or has a flat shape and/or has a shape selected from the group of platelets, fibers, rods, tubes, ribbons or whiskers or combinations thereof, and/or wherein the particle (3) has a surface area extending along a first plane (Pp) being larger than a surface area extending along a second plane running perpendicularly to the first plane, the surface area extending along the first plane (Pp) preferably furthermore being larger than a surface area extending along a third plane running perpendicularly to the first plane and the second plane.

8. The composite material (1) according to any one of the preceding claims, wherein the particle (3) comprises at least one interface (6), and wherein said interface (6) results in a mismatch in refractive indices being associated with the particle (3), and/or

> wherein the particle (3) comprises at least one coating (7), said coating (7) having at least one refractive index being different from at least one refractive index of the particle (3), and/or
> wherein the particle (3) is configured such, that electromagnetic radiation (EM) being incident on the particle (3) undergoes constructive interference, and/or
> wherein the particle (3) is responsive to a magnetic field, and/or
> wherein the particle (3) comprises at least one magnetic and/or at least one superparamagnetic component.

9. The composite material (1) according to any one of the preceding claims, comprising at least one further particle (3a),

> wherein the further particle (3a) comprises at least one interface, wherein the interface of said further particle (3a) results in a mismatch in refractive indices being associated with the further particle (3a), and wherein said interface of the further particle (3a) is the same as or different from an interface of the particle (3) resulting in a mismatch in refractive indices being associated with the particle (3), and/or
> wherein the further particle (3a) comprises at least one coating being the same as or different from a coating of the particle (3), and/or
> wherein the further particle (3) has an orientation with respect to the composite material (1) being the same as or different from an orientation of the particle (3) with respect to the composite material (1), and/or
> wherein the particle (3) and the further particle (3a) are aligned with respect to one another at a given angle.

10. The composite material (1) according to any one of the preceding claims, comprising at least two further particles (3a, 3b), and wherein an orientation of the at least two further particles (3a, 3b) with respect to the particle (3) and/or with respect to the composite material (1) is the same or different from one another.

11. The composite material (1) according to any one of the preceding claims, wherein the matrix (2) comprises at least a first region and a second region, wherein the first region comprises one or more particles (3, 3a, ...) and the second region comprises one or more particles (3, 3a, ...), and
wherein the one or more particles (3, 3a, ...) in the first region are at least partially the same as or different from the one or more particles (3, 3a, ...) in the second region.

12. Use of a composite material (1) as claimed in any one of the preceding claims as a flexible device, the flexible device preferably being a stretchable display and/or a soft actuator and/or a sensor and/or a medical device and/or a toy and/or a robot.

13. A flexible device (8) comprising or consisting of at least one composite material (1) as claimed in any one of claims 1 to 11, the flexible device (8) preferably being a stretchable display and/or a soft actuator and/or a sensor and/or a medical device and/or a toy and/or a robot.

14. A method of manufacturing a composite material (1), preferably a composite material according to any one of claims 1 to 11, the method comprising the steps of:

> - Providing a matrix (2); and
> - Providing at least one particle (3);

> wherein the matrix (2) is deformable and is configured to adopt at least a first state of deformation and a second state of deformation being different from the first state of deformation upon an application of a force (F) to the composite material (1), and
> wherein the particle (3) is in connection with the matrix (2),
> **characterized in that** the composite material (1) exhibits at least a first characteristics when the matrix (2) is in its first state of deformation and **in that** the composite material (1) exhibits at least a second characteristics when the matrix (2) is in its second state of deformation, wherein the first characteristics differs from the second characteristics.

**15.** The method according to claim 14, further comprising the step of aligning the particle (3) with respect to the matrix (2), and/or
further comprising the step of providing at least one further particle (3a) and aligning said further particle (3a) with respect to the particle (3), the further particle (3a) preferably being different from the particle (3).

FIG. 1a

**FIG. 1b**

3a

3

2

magnetoresponsive platelets

polymer

FIG. 2a

magnetic field strength

stronger

weaker

3a

3

90°

3a

3

weakly magnetoresponsive platelets

strongly magnetoresponsive platelets

polymer

**FIG. 2b**

FIG. 2c

**FIG. 2d**

FIG. 3a

undeformed (side)   undeformed (top)

100% strain in x (side)   100% strain in x (top)

100% strain in y (top)

FIG. 3b

**FIG. 3c**

**FIG. 3d**

**FIG. 4a**

FIG. 4b

FIG. 4c

FIG. 5

As fabricated    0.1 Vol%    0.2 Vol%    0.5 Vol%    1 Vol%

After etching

EP 4 060 007 A1

FIG. 6

A

FIG. 7a

B

FIG. 7b

C

**FIG. 7c**

D

**FIG. 7d**

FIG. 7e

FIG. 7f

G

**FIG. 7g**

H

**FIG. 7h**

FIG. 8a

FIG. 8b

FIG. 9a

FIG. 9b

FIG. 9c

FIG. 10a

**FIG. 10b**

**FIG. 10c**

Europäisches
Patentamt

European
Patent Office

Office européen
des brevets

## EUROPEAN SEARCH REPORT

Application Number

EP 21 16 3020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/152638 A1 (CHEN PANGKUAN [US] ET AL) 2 June 2016 (2016-06-02) * claims 1-57 * | 1-15 | INV. C09K9/00 |
| X | US 2018/050524 A1 (SUN LUYI [US] ET AL) 22 February 2018 (2018-02-22) * claims 1-27 * | 1-15 | |
| X | CN 102 190 747 A (UNIV FUDAN) 21 September 2011 (2011-09-21) * abstract * | 1-15 | |

TECHNICAL FIELDS
SEARCHED       (IPC)

C09K

The present search report has been drawn up for all claims

| Place of search | Date of completion of the search | Examiner |
|---|---|---|
| The Hague | 4 August 2021 | Lehnert, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 3020

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2021

| Patent document cited in search report | | Publication date | Patent family member(s) | | Publication date |
|---|---|---|---|---|---|
| US 2016152638 | A1 | 02-06-2016 | US  2016152638 A1 <br> WO  2016090062 A1 | | 02-06-2016 <br> 09-06-2016 |
| US 2018050524 | A1 | 22-02-2018 | NONE | | |
| CN 102190747 | A | 21-09-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4038099 A
- US 5433779 A
- EP 0271767 A

- WO 2011120643 A

### Non-patent literature cited in the description

- **R. M. ERB ; R. LIBANORI ; N. ROTHFUCHS ; A. R. STUDART.** Composites Reinforced in Three Dimensions by Using Low Magnetic Fields. *Science,* 2012, vol. 335, 199-204
- **R. M. ERB ; J. S. SANDER ; R. GRISCH ; A. R. STUDART.** Self-shaping composites with programmable bioinspired microstructures. *Nat Commun,* 2013, vol. 4, 1712

- **J.-Y. SUN et al.** Highly stretchable and tough hydrogels. *Nature,* 2012, vol. 489, 133-136
- **J. JORGENSEN.** *Parametric Tool to Generate 3D Printable PneuNet Bending Actuator Molds,* 2018, https://softroboticstoolkit.com/parametric-tool-3d-printed-molds
- **E. FEILDEN et al.** Micromechanical strength of individual Al2O3 particles. *Scripta Mater.,* 2017, vol. 131, 55-58